# EUROPÄISCHE PATENTSCHRIFT

(11) **EP 0 847 494 B1**
(45) Veröffentlichungstag und Bekanntmachung des Hinweises auf die Patenterteilung: **22.03.2000**
(21) Anmeldenummer: 96938919.6
(22) Anmeldetag: 31.08.1996
(51) Int. Cl.: F02N 11/08

(54) **ANTRIEBSSYSTEM, INSBESONDERE FÜR EIN KRAFTFAHRZEUG, UND VERFAHREN ZUM BETREIBEN DESSELBEN**
DRIVE SYSTEM, IN PARTICULAR A DRIVE SYSTEM FOR A MOTOR VEHICLE, AND METHOD OF OPERATING THE SYSTEM
SYSTEME D'ENTRAINEMENT, NOTAMMENT POUR AUTOMOBILE ET PROCEDE PERMETTANT DE L'ACTIONNER

(30) Priorität: 31.08.1995 DE 19532135
(43) Veröffentlichungstag der Anmeldung: 17.06.1998
(73) Patentinhaber: Continental ISAD Electronic Systems GmbH & Co. KG, 86899 Landsberg (DE); GRÜNDL UND HOFFMANN GmbH GESELLSCHAFT FÜR ELEKTROTECHNISCHE ENTWICKLUNGEN, 82319 Starnberg (DE)
(72) Erfinder: MASBERG, Ullrich, D-51503 Rösrath (DE); PELS, Thomas, D-46359 Heiden (DE); ZEYEN, Klaus-Peter, D-50737 Köln (DE); GRÜNDL, Andreas, D-81377 München (DE); HOFFMANN, Bernhard, D-82319 Starnberg (DE)
(74) Vertreter: von Samson-Himmelstjerna, Friedrich R., Dipl.-Phys.
(86) Internationale Anmeldenummer: DE9601619
(87) Internationale Veröffentlichungsnummer: WO9708457

(56) Entgegenhaltungen:
- FR-A- 2 563 280
- US-A- 4 699 097
- US-A- 4 797 602

## Beschreibung

Die Erfindung betrifft ein Antriebssystem, insbesondere für ein Kraftfahrzeug.

Im Stadtverkehr laufen Verbrennungsmotoren von Kraftfahrzeugen aufgrund häufiger Halte an Ampeln und Kreuzungen einen beträchtlichen Teil ihrer Betriebszeit im Leerlauf. Dies stellt eine erhebliche Resourcenverschwendung und Umweltbelastung dar, da es einen an sich unnützen Mehrverbrauch an Kraftstoff mit einhergehender Emission giftiger, klimaaktiver oder sonstwie schädlicher Abgase mit sich bringt.

Um diese unnötigen Leerlaufphasen zu verringern, sind bereits Personenkraftwagen mit einer sog. Start-Stop-Automatik realisiert worden. Hierbei wird der Verbrennungsmotor bei Eintritt einer bestimmten Stopbedingung (z.B. Fahrzeug-Stillstand und Motor-Leerlauf) automatisch gestoppt, beispielsweise durch Unterbrechen der Kraftstoffzufuhr. Bei Eintritt einer bestimmten Startbedingung (z.B. Betätigen des Fahrpedals oder Einlegen eines Ganges) wird der Verbrennungsmotor dann wieder mit Hilfe des elektrischen Starters des Fahrzeugs automatisch gestartet. Derartige Antriebssysteme mit Start-Stop-Automatik sind beispielsweise aus folgenden Veröffentlichungen bekannt: EP 0 233 738 A1 (LUCAS), DE 33 43 018 C1 (MITSUBISHI), DE 44 21 512 C1 (VW).

Obwohl bekannte Antriebssysteme mit Start-Stop-Automatik grundsätzlich funktionieren und eine Verringerung des Gesamt-Kraftstoffverbrauchs möglich erscheinen lassen, haben sie doch auch Probleme, die bislang ihre Verbreitung erschwert haben: Die verwendeten herkömmlichen Starter verursachen ein relativ lautes Startgeräusch, was hauptsächlich von den Getriebegeräuschen der Ritzelübersetzung des hochübersetzten Startermotors herrührt (die Übersetzung ist i.a. 1:10 bis 1:20). Während beim herkömmlichen Kraftfahrzeug ohne Start-Stop-Automatik der Starter nur recht selten betätigt wird und daher das laute Startergeräusch hingenommen wird, führt es bei Start-Stop-Automatik mit der dann häufigen Starterbetätigung zu einer störenden Geräuschbelästigung der Fahrzeuginsassen sowie der Straßenanwohner im Bereich von Ampeln und Kreuzungen. Darüber hinaus unterliegt der herkömmliche Starter mit seinem Magnetschalter, Ritzel, Einspurmittel und Elektromotor bei der häufigen Betätigung einem außergewöhnlich hohen Verschleiß, dem ein üblich dimensionierter Starter kaum gewachsen ist; es wird daher bei bekannten Antriebssystemen mit Start-Stop-Automatik ein - eigentlich überdimensionierter - Lastwagenanlasser verwendet.

In dem Buch D. Henneberger "Elektrische Motorausrüstung", Braunschweig 1990, Seiten 98-103, wird ein Schwungrad-Starter-Generator vorgeschlagen, dessen Läufer ein Schwungrad ist, welches im Antriebsstrang eines Kraftfahrzeugs auf der Abtriebswelle zwischen Verbrennungsmotor und Getriebe sitzt und von diesen mit Hilfe je einer Kupplung entkoppelbar ist. Zum Starten wird zunächst das entkoppelte - und damit leerlaufende - Schwungrad elektromotorisch beschleunigt. Der eigentliche Startvorgang erfolgt dann bei einer zum Starten ausreichenden Schwungrad-Drehzahl (z.B. bei 1000 min⁻¹) durch schnelles Schließen der Kupplung zum Verbrennungsmotor. Dadurch wird das Schwungrad abgebremst und die Kurbelwelle des Verbrennungsmotors beschleunigt, bis beide eine gemeinsame mittlere Drehzahl (z.B. 500 U/min) erreichen und der Selbstanlauf des Verbrennungsmotors erfolgt.

Eigenschaften dieses Schwungrad-Starter-Generators sind einerseits die Begrenzung der zum Starten vorhandenen Energie und die relativ lange Totzeit (die Schwungradbeschleunigung vom Stillstand bis zu der zum Starten ausreichenden Drehzahl dauert nämlich ca. 3 Sek.), was ein Starten unter nicht-idealen Bedingungen und mehreren aufeinanderfolgenden Startversuchen erschwert, sowie andererseits der durch das Kuppeln mit dem Verbrennungsmotor bei hohen Relativdrehzahlen verursachte Kupplungsverschleiß und die damit auch einhergehenden Reibungsverluste, welche den Wirkungsgrad verschlechtern und - bei mehreren aufeinanderfolgenden Startvorgängen - auch eine thermische Überlastung der Kupplung zur Folge haben können. Obwohl in dem Buch die Möglichkeit einer Start/Stop-Funktion erwähnt ist, erscheint der vorgeschlagene Schwungrad-Starter-Generator aufgrund seiner o.g. Eigenschaften hierfür weniger geeignet. Ein ähnlicher Schwungradstarter mit Start-/Stop-Funktion ist aus der DE 37 43 289 A1 (LuK) bekannt.

Die FR-A-2 563 280 schlägt vor, bei einem Antriebssystem für ein Kraftfahrzeug dessen Verbrennungsmotor in Antriebspausen nicht stillzusetzen, sondern ihn mit Hilfe einer elektrischen Maschine weiter durchzudrehen, um Zusatzaggregate weiterhin mit mechanischer Antriebsenergie zu versorgen. Die elektrische Maschine dient außerdem als Starter für den Verbrennungsmotor.

Aus der US-A-4 797 602 ist ein Starter/Generator bekannt, der im Zusammenhang mit einer Start-Stop-Steuerung arbeiten kann. Der Starter/Generator ist gegenüber dem Verbrennungsmotor im Verhältnis 4:1 übersetzt. Der Starter/Generator läuft auf einer gegenüber einem Fahrzeugbordnetz erhöhten Spannung, wobei ein Energiespeicher auf dem erhöhten Spannungsniveau vorgesehen ist.

Als weiterer Stand der Technik werden folgende Veröffentlichungen genannt: EP 0 151 935 A1, DE 30 48 972 C2, DE 39 26 054 A1, US 6 323 743, DE 44 12 438 C1, DE 43 44 053, DE 43 18 949 C1, DE 33 38 548 A1, DE 33 35 923 A1, DE 32 30 121 A1, DE 43 11 697 A1, DE 37 43 289 A1, DE 42 02 082 A1, DE 40 00 678 A1, US 43 46 773, DE 33 38 548 A1, DE 44 37 322 A1, DE 28 55 886 A1, DE 42 25 683 A1, DE 32 43 513 A1, DE 38 14 484 A1, DE 44 08 719 C1, DE 23 53 724 B2, DE 44 04 791 C1, Zeitschrift "Kraftfahrzeugtechnik", 11/82, S. 346-347.

Die Erfindung zielt darauf ab, Antriebssysteme mit Start-Stop-Automatik weiterzuentwickeln.

Sie erreicht dieses Ziel mit einem Antriebssystem, insbesondere für ein Kraftfahrzeug, mit:
- einem Verbrennungsmotor als Antriebsaggregat;
- einer direkt mit der Triebwelle des Antriebsaggregats gekoppelten oder koppelbaren elektrischen Drehfeldmaschine, welche mit der gleichen Drehzahl wie die Triebwelle dreht und so ausgebildet ist, daß sie das Antriebsaggregat im Zusammenlauf aus dem Stand starten kann;
- wenigstens einem Wechselrichter, der die für die magnetischen Felder der elektrischen Maschine benötigten Spannungen und/oder Ströme variabler Frequenz, Amplitude und/oder Phase erzeugt;
- wobei der Wechselrichter einen Zwischenkreis mit einem gegenüber einem Bordnetz des Kraftfahrzeugs erhöhten Spannungsniveau aufweist, wobei in diesem Bordnetz ein Energiespeicher zum Speichern elektrischer Energie liegt;
- und wobei ein weiterer Energiespeicher vorgesehen ist, dem zum Starten Energie entnommen wird, und bei dem es sich um einen auf dem erhöhten Spannungsniveau des Zwischenkreises liegenden elektrischen Energiespeicher und/oder um einen durch Parallelschaltung zu einem auf dem erhöhten Spannungsniveau liegenden Zwischenkreiskondensator elektrisch mit dem Zwischenkreis verbundenen, elektrisch betriebenen Schwungradspeicher handelt; und mit
- einer automatischen Start-Stop-Steuerung, in deren Rahmen das Antriebsaggregat durch die elektrische Maschine gestartet wird (Anspruch 1).

Eine "elektrische Maschine" ist jede Art von Maschine für Rotationsbewegungen, die als elektrischer Motor (und ggf. auch als elektrische Bremse und/oder Generator) betrieben werden kann.

Unter einer "direkten" Kopplung" wird insbesondere eine getriebelose Kopplung des Läufers (oder des ggf. drehbaren Ständers) der elektrischen Maschine mit der Triebwelle verstanden. Die Drehmomentübertragung kommt also nicht etwa indirekt durch Zahnräder oder Zugmittel (z.B. Keilriemen) zustande. Die Drehzahl des Läufers (bzw. des ggf. drehbaren Ständers) gleicht vorzugsweise der Drehzahl der Triebwelle und damit i.a. des Antriebsaggregats.

Bei einem "Zusammenlauf" bleibt das Verhältnis der momentanen Drehzahlen des elektrischen Motors und des Antriebsaggregats - im Unterschied zu dem o.g. Schwungradstarter - im wesentlichen konstant (und zwar hat es insbesondere den Wert Eins). Zusammenlauf "aus dem Stand" bedeutet, daß die elektrische Maschine und das Antriebsaggregat - anders als bei dem o.g. Schwungrad-Starter - gemeinsam aus dem Stand hochlaufen. Im folgenden wird ein "Starten im Zusammenlauf aus dem Stand auch als "Direktstarten" bezeichnet.

Das erfindungsgemäße Antriebssystem hat folgende Vorteile:
- aufgrund der direkten Kopplung oder Koppelbarkeit der elektrischen Maschine mit der Triebwelle des Antriebsaggregats erzeugt der Starter praktisch keine hörbaren Geräusche;
- aufgrund des Zusammenlaufs aus dem Stand erfolgt das Starten schnell und mit nur geringer Totzeit;
- aufgrund der direkten Kopplung und des Zusammenlaufs ist der Starter praktisch verschleißfrei
- und erreicht einen relativ sehr hohen Wirkungsgrad;
- der Starter hat im Vergleich zu einem Schwungrad-Starter ein relativ geringes Gewicht, günstig ist auch der Fortfall des Kupplungssystems zum Einkoppeln des Schwungrads;
- insgesamt kann das Antriebssystem aufgrund dieser vorteilhaften Eigenschaften zu einer größeren Verbreitung der Start-Stop-Automatik führen und so durch Verringerung des Rohstoffverbrauchs und der Emission von Abgasen einen wesentlichen Beitrag zum Umweltschutz leisten.

Vorteilhaft sitzt der Läufer (bzw. der drehbare Ständer) der elektrischen Maschine auf der Triebwelle (i.a. der Kurbelwelle) des Verbrennungsmotors oder einer (ggf. von ihr entkuppelbaren) Verlängerung (Anspruch 2). Das heißt, der Läufer (bzw. drehbare Ständer) und die Triebwelle bzw. deren Verlängerung sind koaxial angeordnet. Sie sind vorzugsweise dauernd drehfest miteinander verbunden; möglich ist aber auch eine lösbar drehfeste Verbindung, die wahlweise eine Relativdrehung erlaubt oder ausschließt.

Die automatische Start-Stop-Steuerung veranlaßt vorzugsweise ein automatisches Stoppen des Antriebsaggregats, wenn eine Stopbedingung (oder eine von mehreren) erfüllt ist.

Zur Definition einer Stopbedingung können verschiedene Einzelbedingungen dienen, z.B.: Nullast, Schiebebetrieb, Leerlauf des Antriebsaggregats (d.h. Drehzahl unterhalb eines bestimmten niedrigen Wertes), Stillstand des Kraftfahrzeugs (d.h. Fahrgeschwindigkeit unterhalb eines bestimmten kleinen Wertes, z.B. 4 km/h), Antriebsaggregats ist ausgekuppelt, kein Gang ist eingelegt, die Betriebs- oder Feststellbremse ist betätigt, Betätigung eines Stopschalters (Anspruch 3). Diese Einzelbedingungen können die Stopbedingung allein definieren (z.B. Stopbedingung = Stillstand des Kraftfahrzeugs) oder in beliebiger (Unter)Kombination (z.B. Stopbedingung = Leerlauf des Antriebsaggregats und Stillstand des Kraftfahrzeugs) und/oder in Kombination mit weiteren Betriebsbedingungen z.B. daß die Betriebstemperatur des Antriebsaggregats erreicht ist und/oder der Ladezustand der Batterie für weitere Starterbetätigungen ausreichend ist. Das Stoppen des Antriebsaggregats kann entweder sofort bei Eintritt der Stopbedingung (d.h. mit sehr kurzer Reaktionszeit) oder zeitverzögert (z.B. mit einer Reaktionszeit von einigen Sekunden) erfolgen. In die Stopbedingung können auch Größen eingehen, welche die Fahr-Vorgeschichte betreffen, z.B. kann es erforderlich sein, daß das Fahrzeug seit dem letzten Stoppen des Antriebsaggregats wenigstens einmal gefahren ist. Auch ist es möglich, aus der vorausgehenden Fahrcharakteristik zu erkennen, ob sich das Fahrzeug etwa im Stadtverkehr, einem Stop-and-Go-Verkehr einer Verkehrsstauung oder im Überlandverkehr befindet; die Größe "Stadtverkehr" kann als weitere Einzelbedingung für die Stopbedingung gefordert sein. Die Reaktionszeit kann adaptiv variabel sein, in Abhängigkeit von Einzel- oder Betriebsbedingungen oder der Fahr-Vorgeschichte, z.B. kann sie in dem Fall, daß in der nahen Vergangenheit viele Ampelhalte vorgekommen sind, automatisch verkürzt und im gegenteiligen Fall verlängert werden.

Entsprechend veranlaßt die Start-Stop-Steuerung vorzugsweise bei Vorliegen einer Startbedingung (oder einer von mehreren) ein automatisches Starten des Antriebsaggregats mit Hilfe der elektrischen Maschine. Auch zur Definition der Startbedingung können verschiedene Einzelbedingungen - allein oder in (Unter-)Kombination - dienen, z.B: Betätigung des Fahrpedals, Lösen der Betriebs- bzw. Feststellbremse, Betätigen der Kupplung, Berühren oder Bewegen eines Gangschalthebels, Einlegen eines Ganges, Betätigen eines Startschalters, (Anspruch 4). Für die Startbedingung kann das Erfülltsein noch weiterer Bedingungen gefordert sein, z.B. daß der Motor stillsteht und/oder zuvor durch automa tischen Stop abgeschaltet worden ist. Ein "Notstart" kann ausgelöst werden, wenn z.B. die Temperatur des Antriebsaggregats unter die Betriebstemperatur abnimmt oder der Ladezustand der Batterie unter einen Grenzwert absinkt. Um hierbei ein unbeabsichtiges Anfahren des Kraftfahrzeugs auszuschließen, kann jedoch das Erfülltsein einer entspre chenden Bedingung - wie etwa "Kein Gang eingelegt" - erforderlich sein.

Herkömmliche Starter bringen wegen ihrer hohen Übersetzung den Verbrennungsmotor nur auf eine relativ niedrige Start-Drehzahl (typischerweise 80-250 U/min), die weit unterhalb dessen Leerlauf-Drehzahl (typischerweise 600-800 U/min) liegt. Entsprechendes gilt für bekannte Schwungrad-Starter, will man Totzeit und Kupplungsverschleiß in akzeptablen Grenzen halten. Die Drehzahldifferenz zwischen Start-Drehzahl und der Leerlauf-Drehzahl muß der Verbrennungsmotor dann aus eigener Kraft überwinden. Er benötigt hierfür jedoch - da er sich bei diesen Drehzahlen weit unterhalb seiner Leerlauf-Drehzahl in einem sehr ungünstigen Betriebsbereich befindet - ein relativ großes Quantum Kraftstoff, welches zudem nur unvollständig verbrennt. Jeder Motorstart ist daher mit zusätzlichem Kraftstoffverbrauch und besonders umweltschädlichen Emissionen verbunden. Dies macht insgesamt einen Teil der ökologisch günstigen Auswirkungen einer Start-Stop-Automatik wieder zunichte. Vorzugsweise ist daher das Antriebssystem so ausgebildet, daß die elektrische Maschine wenigstens im wesentlichen bis zum Erreichen der Leerlauf-Drehzahl des Antriebsaggregats (welche bei Betriebstemperatur üblicherweise zwischen 600 und 800 U/min liegt) antreibend wirkt (Anspruch 5). Diese Maßnahme läßt den Verbrennungsmotor praktisch erst bei Erreichen seiner Leerlaufdrehzahl anlaufen und läßt so das betrieblich ungünstige Hochlaufen aus eigener Kraft entfallen. Sie vermindert damit den Kraftstoffverbrauch und die besonders schädlichen Emissionen beim Starten und macht zudem den Startvorgang schneller. Die Maßnahme ist also ökologisch besonders vorteilhaft und ist besonders geeignet, zu einer noch größeren Verbreitung von Antriebssystemen mit Start-Stop-Automatik beizutragen.

Vorgeschlagen wurden auch automatische Start-Stop-Steuerungen, bei denen der Verbrennungsmotor außerdem im Schub betrieb (z.B. bei Berg-ab-Fahrt) ausgekuppelt und gestoppt wird. Dabei geht aber schlagartig die Verbrennungsmotor-Bremswirkung verloren. Vorteilhaft wirkt daher die elektrische Maschine im Fall eines Antriebsaggregat-Stops bei Schubbetrieb als elektrische Fahrzeug-Bremse, die das entfallene Antriebsaggregat-Bremsmoment ersetzt (Anspruch 6). Hiezu ist vorteilhaft zwischen dem Antriebsaggregat und der elektrischen Maschine eine steuerbar betätigbare Kupplung angeordnet.

Unter der in Anspruch 1 genannten "Drehfeldmaschine" wird - im Gegensatz zu einer Stromwendermaschine - eine Maschine verstanden, in der ein magnetisches Drehfeld auftritt. Hierbei kann es sich z.B. um eine Asynchron- oder Synchronmaschine, insbesondere für Dreiphasenstrom, oder um eine Maschine mit elektronischer Kommutierung handeln. Bei einer Drehfeldmaschine überstreicht das magnetische Feld einen vollen 360°-Grad-Umlauf, bei einer Wanderfeldmaschine hingegen nur einen oder mehrere Ausschnitte (Sektoren) hiervon. Bei der Wanderfeldmaschine kann es sich also z.B. um eine Asynchron- oder Synchronmaschine handeln, deren Ständer sich nur über einen oder mehrere Sektoren des Läufers erstreckt - ähnlich einem bzw. mehreren gekrümmten Linearmotor(en).

Der Wechselrichter erzeugt die für die magnetischen Felder (insb. Dreh- bzw. Wanderfelder) benötigten Spannungen und/oder Ströme mit (innerhalb gewisser Grenzen) frei wählbarer Frequenz, Amplitude oder Phase oder beliebiger Kombinationen dieser Größen. Er kann dies vorteilhaft mit Hilfe elektronischer Schalter tun (sog. Pulswechselrichter). Besonders vorteilhaft sind alle drei Größen - Frequenz, Amplitude und Phase - frei wählbar. Ein Wechselrichter hat u.a. den Vorteil, die elektrische Maschine mit hoher Variabilität bei unterschiedlichsten Betriebszuständen, ggf. - wie unten noch näher erläutert wird - auch in einem Betrieb mit schnell alternierenden Drehmoment, ggf. mit überlagertem Gleich-Drehmoment betreiben zu können.

Vorteilhaft erfüllt die elektrische Maschine neben ihrer Starterfunktion außerdem während des Betriebs des Antriebsaggregats die Funktion einer aktiven Verringerung von Drehungleichförmigkeiten (Anspruch 7). Vorschläge für Vorrichtungen zur aktiven Verringerung von Drehungleichförmigkeiten offenbaren z.B. Patent Abstracts of Japan, Band 11, Nr. 28 (M-557), 27. Januar 1987 & JP-A-61 200 333 (NISSAN I), Patent Abstracts of Japan, Band 4, Nr. 29 (M-002), 14. März 1980 & JP-A-55 005 454 (TOYOTA), EP-B-0 427 568 (ISUZU), DE-A-32 30 607 (VW), EP-B-0 175 952 (MAZDA), Patent Abstracts of Japan, Band 7, Nr. 240 (M-251), 25. Oktober 1983 & JP-A-58 126 434 (NISSAN II), DE-A-41 00 937 (FICHTEL & SACHS), DE-A-40 38 301 (HITACHI/NISSAN), EP-A-0 440 088 (NISSAN III) und EP-A-0 604 979 (NIPPONDENSO).

Bei den Drehungleichförmigkeiten kann es sich insbesondere um solche handeln, die bei einem Verbrennungsmotor, insbesondere einem Hubkolbenmotor mit innerer Verbrennung, durch die auf die Triebwelle (d.h. insbesondere die Kurbelwelle) wirkenden Gas- und Massenkräfte der einzelnen Hubkolben auftreten. Beispielsweise treten bei einem Vierzylinder-Viertaktmotor Drehungleichförmigkeiten in der zweiten Ordnung (d.h. dem zweifachen der Drehfrequenz des Motors) auf. Daneben gibt es Drehungleichförmigkeiten bei höheren Ordnungen sowie stochastisch auftretende Ungleichförmigkeiten. Bei dem Verbrennungsmotor kann es sich z.B. um einen Zweitakt- oder Viertaktmotor mit gerader Zylinderzahl (z.B. 2, 4, 8, 10, 12 Zylinder usw.) oder ungerader Zylinderzahl (1, 3, 5, 7, 9, 11 usw. Zylinder) handeln (der z.B. nach dem Otto- oder dem Dieselprinzip arbeitet). Grundsätzlich kann es sich auch um einen andersartigen Verbrennungsmotor, wie z.B. einen Hubkolbenmotor mit äußerer Verbrennung (sog. Stirling-Motor) handeln. Eine andere Möglichkeit ist ein Kreiskolbenmotor (z.B. ein Wankelmotor), bei dem zumindest die Gaskräfte zu Drehungleichförmigkeiten führen können. Daneben kommen Turbinen, insbesondere Gas- oder Dampfturbinen in Frage. Bei ihnen sind die Drehungleichförmigkeiten im allgemeinen zwar nur klein; für bestimmte Anwendungen kann es jedoch auch bei ihnen auf besonders guten Rundlauf ankommen.

Die Drehungleichförmigkeiten müssen aber nicht (ausschließlich) von dem Antriebsaggregat herrühren. Es kann sich vielmehr auch um Drehungleichförmigkeiten handeln, die in einem Antriebsstrang - also zwischen dem Antriebsaggregat und dem Abtriebspunkt entstehen, etwa durch Kardangelenke, räumliche Wellenschwingungen oder Getriebeverschleiß.

Grundsätzlich kann die die elektrische Maschine so gesteuert werden, daß sie entweder nur Drehungleichförmigkeiten zum Schnellen hin (sog. positive Drehungleichförmigkeiten) oder zum Langsamen hin (sog. negative Drehungleichförmigkeiten) entgegenwirkt. Besonders wirksam ist jedoch eine Betriebsweise, bei der sie sowohl negativen als auch positiven Drehungleichförmigkeiten entgegenwirkt, bevorzugt indem sie ein schnell alternierendes, und zwar bei einer positiven Drehungleichförmigkeit ein bremsendes und bei einer negativen Drehungleichförmigkeit ein antreibendes Drehmoment erzeugt. Die elektrische Maschine kann für weitere Funktionen zur Erzielung einer antreibenden Wirkung oder einer bremsenden oder generatorischen Wirkung ein positives bzw. negatives Drehmoment erzeugen, das dem gegenüber nur langsam variiert oder konstant ist (sog. Gleich-Drehmoment). Gleichdrehmoment und schnell alternierender Wechseldrehmoment können einander überlagert werden (Anspruch 8). Bei Ausgestaltungen, bei denen die elektrische Maschine außerdem als elektromagnetische Kupplung wirkt, kann an die Stelle des schnell alternierend bremsenden und antreibenden Drehmoments ein schnell variierend größerer und kleinerer Kupplungsschlupf treten.

Unter einer "schnellen Variation" wird eine Variation im Frequenzbereich der zu verringernden Drehungleichförmigkeiten verstanden, also z.B. bei der Drehungleichförmigkeit der 2. Ordnung und bei einer Drehzahl von 3000 U/min eine Variation mit einer Frequenz von 100 Hz. Demgegenüber variiert das ggf. überlagerte Gleich-Drehmoment - abgesehen von möglicherweise steilen Flanken am Anfang oder Ende der Überlagerung - im allgemeinen langsam oder ist konstant.

Durch die (insbesondere additive) Überlagerung des Gleich-Drehmoments in der gewünschten Richtung und Stärke sind die Drehungleichförmigkeits-Verringerung und die Gleich-Drehmomenterzeugung voneinander entkoppelt. Das schnell variierende Drehmoment wird in seinem Verlauf durch die Überlagerung praktisch nicht verändert, nur gegenüber der Nullinie verschoben. Ausnahmsweise verändert sich das schnell variierende Drehmoment nur dann, falls der Verbrennungsmotor aufgrund der mit der Zuschaltung des Gleich-Drehmoments einhergehenden Laständerung tätsächlich geänderte Drehungleichförmigkeiten zeigt.

Falls das momentan gelieferte Gleich-Drehmoment kleiner als die momentane Amplitude des Wechsel-Drehmoments ist, zeigt das Gesamt-Drehmoment der elektrischen Maschine - wenn auch gegenüber der Nullinie verschoben - abwechselnd positive und negative Werte. Falls es hingegen größer ist, ist das Gesamt-Drehmoment nur positiv oder negativ, wobei dessen Betrag einen schnell variierenden Anteil enthält. Ein bremsendes Gleich-Drehmoment kann dazu dienen, daß die elektrische Maschine den Kupplungsschlupf verringert, eine bremsende Synchronisier-Funktion ausübt, als Generator zur Stromversorgung fungiert und/oder eine Bremsung des Fahrzeugs herbeiführt oder unterstützt und/oder etwa im Rahmen einer Anti-Schlupf-Regelung durch Bremsen den Schlupf eines Antriebsrads verringert. Die bei Anwenden dieser Bremsfunktionen generatorisch gewonnene Bremsenergie (Gleichdrehmoment-Bremsenergie) kann - wie die von Drehungleichförmigkeiten herrührende - gespeichert werden (z.B. in einem elektrischen Speicher oder in einem Schwungradspeicher) und als Antriebsenergie wiederverwendet oder in ein Netz oder z.B. die Fahrzeugbatterie eingespeist werden. Ein antreibendes Gleich-Drehmoment kann einer beschleunigenden Synchronisierfunktion dienen oder eine Beschleunigung des Fahrzeugs unterstützen (die elektrische Maschine wirkt dann als "Booster") oder herbeiführen, beispielsweise um Beschleunigungslöcher, etwa bei einem Turbolader-Motor, zu füllen.

Um einen möglichst hohen Gesamtwirkungsgrad des Antriebssystems zu erzielen, wird vorteilhaft die beim Verringern einer positiven Drehungleichförmigkeit gewonnene Energie (Drehungleichförmigkeits-Bremsenergie) und/oder die bei bremsendem Gleich-Drehmoment gewonnene Energie (Gleichdrehmoment-Bremsenergie) wenigstens teilweise gespeichert und die gespeicherte Drehungleichförmigkeits-Bremsenergie wird wenigstens teilweise wiederverwendet, ggf. zum Verringern einer negativen Drehungleichförmigkeit (Anspruch 9).

Die Speicherung der Drehungleichförmigkeits-Bremsenergie und/oder der Gleichdrehmoment-Bremsenergie kann insbesondere durch einen elektrischen Speicher und/oder einen mechanischen Speicher (Schwungradspeicher) erfolgen: Als elektrischer Speicher kann beispielsweise eine Kapazität, Induktivität oder eine (schnelle) Batterie dienen.

Unter einem "Zwischenkreis" versteht man einen Kreis, welcher im wesentlichen Gleichspannung bzw. -strom liefern kann, aus der ein nachgeschalteter Wechselrichter-Teil (der sog. Maschinen-Wechselrichter) durch Pulsen oder Takten variable Wechselspannungen bzw. -ströme bilden kann. Diese Gleichspannung bzw. dieser Gleichstrom muß Spannungs- bzw. Stromimpulse mit extremer Flankensteilheit und auf hohelm Spannungs- bzw. Stromniveau bereitstellen. Im allgemeinen umfaßt ein Zwischenkreis-Wechselrichter drei Baugruppen, und zwar eine Eingangsbaugruppe zur Versorgung mit bzw. Abfuhr von elektrischer Energie, eine Ausgangsbaugruppe in Form des Maschinen-Wechselrichters und den dazwischenliegenden Zwischenkreis.

Bei einem Schwungradspeicher ist das Schwungrad elektrisch über eine (zweite) elektrische Maschine mit dem System gekoppelt. Hierbei kann es sich z.B. um eine von einem eigenen Stromrichter gesteuerte Drehfeld- oder Stromwendermaschine handeln. Die erste elektrische Maschine und die Schwungrad-Maschine arbeiten im Gegentakt: Wenn erstere bremsend wirkt, beschleunigt zweitere das Schwungrad bzw. wenn erstere antreibend oder weniger bremsend wirkt, bremst zweitere das Schwungrad. Mit einem solchen Schwungrad-Energiespeicher können relativ hohe Energiedichten gespeichert werden.

Wie oben im Zusammenhang mit dem Gleich-Drehmoment erwähnt wurde, kann die (erste) elektrische Maschine - neben der ggf. ausgeführten Funktion einer aktiven Verringerung von Drehungleichförmigkeiten - gleichzeitig oder zeitlich versetzt auch andere Funktionen ausführen und so herkömmlicherweise auf diese Funktionen spezialisierte Maschinen ersetzen. Insbesondere kann sie außerdem die Funktion eines Generators zur Stromversorgung, z.B. zur Ladung einer Batterie oder Speisung eines Bordnetzes, haben (Anspruch 10). Die elektrische Maschine ist in dieser Ausgestaltung ein Starter/Generator, der die beiden entsprechenden, herkömmlicherweise gesonderten Maschinen ersetzen kann. Während des Startvorgangs ist i.a. keine Drehungleichförmigkeits-Verringerung erforderlich; hierzu wird die elektrische Maschine vorübergehend als reiner Elektromotor betrieben. Die Generatorfunktion ist hingegen i.a. auch während der ggf. ausgeführten Drehungleichförmigkeits-Verringerung erwünscht. Durch (additive) Überlagerung des schnell variierenden Moments mit einem gleichförmig bremsendes Moment erreicht man im zeitlichen Mittel einen Gewinn elektrischer Energie.

In entsprechender Weise kann die elektrische Maschine auch als Zusatzfunktion ein Beschleunigen und/oder Abbremsen der Welle herbeiführen oder unterstützen (Anspruch 11). Beispielsweise kann dies der Beschleunigung eines Kraftfahrzeugs zusammen mit dem Antriebsaggregat dienen. Zum Abbremsen eines Fahrzeugs kann die elektrische Maschine als verschleißfreie, ggf. generatorische Bremse oder Zusatzbremse dienen. Im Zusammenhang mit einer Antriebs-Schlupf-Regelung kann die elektrische Maschine durch Bremsen schnell das Antriebsmoment des Antriebsaggregats und damit den Schlupf eines oder mehrerer Antriebsräder verringern. Bei elektromagnetischer Kupplungsfunktion kann der Antriebsrad-Schlupf statt durch Bremsen auch durch Vergrößern des KupplungsSchlupfes verringert werden.

Die bei Anwenden dieser Zusatzfunktionen gewonnene Bremsenergie kann - wie oben erwähnt - gespeichert und z.B. als Antriebsenergie wiederverwendet oder in ein Netz oder z.B. die Fahrzeugbatterie eingespeist werden. Um bei der Fahrzeugbremsung mit Hilfe der elektrischen Maschine einen möglichst hohen Wirkungsgrad der Bremsenergie-Rückgewinnung zu erzielen, trennt man beim Bremsen vorteilhaft die elektrische Maschine vom Verbrennungsmotor mit Hilfe einer dazwischengeschalteten, z.B. mechanischen Kupplung.

Zur Versorgung von Hochleistungsverbrauchern, wie Hilfsmaschinen (Klimamaschinen, Servoantriebe, Pumpen) und Heizungen ist es vorteilhaft, daß die elektrische Maschine Strom auf relativ hohem Spannungsniveau, vorzugsweise im oberen Bereich der Niederspannung, wo gerade noch nicht für besonderen Berührungsschutz gesorgt werden muß (z.B. etwa 60 V Gleichspannung) liefert. Geht man darüber hinaus, wird vorzugsweise ein Bereich von 250 - 450 Volt gewählt. Vorteilhaft werden die Hochleistungsverbraucher elektrisch (statt wie bisher mechanisch bzw. durch Abwärme) auf diesen hohen Spannungsniveaus angetrieben (bzw. beheizt). Derart hohe Spannungsniveaus können insbesondere bei einem Zwischenkreis-Wechselrichter im Zwischenkreis bereits vorliegen, und braucht so nicht besonders für diesen Zusatzzweck erzeugt werden. Für Niederleistungsverbraucher kann ein kerkömmliches Niederspannungsbordnetz (12 V oder 24 V) vorgesehen sein.

Die aktive Verringerung von Drehungleichförmigkeiten beruht - wie gesagt - darauf, daß die elektrische Maschine positiven und/oder negativen Drehungleichförmigkeiten entgegenwirkt, also z.B. bei positiven Drehungleichförmigkeiten bremsend und/oder bei negativen antreibend wirkt. Hierfür benötigt die Steuereinrichtung Information über den Zeitpunkt und ggf. den Betrag einer positiven bzw. negativen-Drehungleichförmigkeit.

Eine Möglichkeit, diese Information zu erhalten, liegt in einer Messung der momentanen Drehungleichförmigkeit oder einer anderen, mit ihr gekoppelten Größe. Beruht der Betrieb der elektrischen Maschine auf dieser Information, so handelt es sich um eine (rückgekoppelte) Regelung, da das tatsächliche Vorliegen einer Drehungleichförmigkeit zu einer unmittelbaren Rückwirkung auf diese Drehungleichförmigkeit führt.

Als andere Möglichkeit verwendet man als Information für den Betrieb der elektrischen Maschine nicht die tatsächli che, sondern eine erwartete Drehungleichförmigkeit. Es handelt sich hierbei also um eine (nicht-rückgekoppelte) Steuerung. Beispielsweise kann man bei einem Verbrennungs motor Betrag und Vorzeichen der momentanen Drehungleichförmigkeit als Funktion des (Kurbel)-Wellenwinkels und eines oder weiterer Betriebsparameter (z.B. Drehzahl und Drosselklappenstellung) einmal an einem Prototyp bestimmen bzw. per Rechner simulieren und mit dieser Information, gespeichert in Form eines Kennfeldes, jeden Serien-Verbrennungsmotor ausrüsten. Im Betrieb mißt das System dann den momentan vorliegenden Kurbelwellenwinkel und die weiteren Betriebsparameter (z.B. Drehzahl und Drosselklappenstellung), liest die dazugehörigen gespeicherten Kennfeldwerte für Betrag und Amplitude der erwarteten Drehungleichförmigkeit, und steuert über die Steuereinrichtung die elektrische Maschine entsprechend, um der Drehungleichförmigkeit entgegenzuwirken.

Möglich ist außerdem eine adaptive Steuerung, d.h. eine (nicht-rückgekoppelte) Steuerung, bei der die Steuerinfomation jedoch nicht feststehend ist, sondern durch Messung zeitlich vorausgehender Drehungleichförmigkeiten definiert oder zumindest modifiziert wird.

Möglich sind ferner Mischformen der genannten Arten, z.B. können die in einem Kennfeld gespeicherten Erwartungswerte bezüglich einer erwarteten Größe adaptiv sein (z.B. bezüglich der Amplitude), während sie bezüglich einer anderen erwarteten Größe (z.B. Wellenwinkel) feststehend sein könnten. Eine sehr vorteilhafte Kombination ist auch eine Regelung mit Vorsteuerung, bei der z.B. in jedem Regelintervall die Regelung zunächst entsprechend einem erwarteten Drehungleichförmigkeitswert aus einem Kennfeld voreingestellt wird (Vorsteuerung) und anschließend die i.a. kleineren Abweichungen des tatsächlichen Werts zum voreingestellten Wert nachgeregelt werden (Regelung). Diese Steuerart liefert bei relativ geringem Aufwand ein sehr schnelles und genaues Regelverhalten. Es kann auch vorteilhaft sein, bei niedrigen Drehzahlen (z.B. im Leerlauf) mit (rückgekoppelter) Regelung zu arbeiten, dagegen bei höheren Drehzahlen zu (nicht-rückgekoppelter) Steuerung überzugehen.

Bei Regelung, adaptiver Steuerung und entsprechenden Mischformen muß die Meßgröße nicht unmittelbar die Drehungleichförmigkeit (ggf. abgeleitet aus einer Messung der Winkellage oder -geschwindigkeit als Funktion der Zeit) sein. Es kann sich vielmehr auch um eine (oder mehrere) andere Größe(n) handeln, die einen Schluß auf zumindest einen Teil der auftretenden Drehungleichförmigkeiten erlaubt (erlauben). Bei einem Verbrennungsmotor kann diese Größe vorteilhaft der Gasdruck in einem oder mehreren Motorzylindern sein. Der Gasdruck ist nämlich eine wesentliche, veränderliche Quelle der Drehungleichförmigkeiten. Außerdem zu berücksichtigen ist eine andere wesentliche, praktisch unveränderliche Quelle - die Massenkräfte. Ihr Beitrag kann in einem Kennfeld fest gespeichert sein. Alternativ (oder ergänzend) kann das momentane Drehmoment des Verbrennungs motors, z.B. mit Hilfe einer Drehmomentnabe gemessen werden. Die Verwendung des Gasdruckes und/oder des momentanen Drehmoments als Meßgröße erlaubt somit eine relativ einfache und schnelle Regelung, adaptive Steuerung oder entsprechende Mischform. Der Gasdruck und/oder das momentane Drehmoment kann auch eine für die Verbrennungsmotor-Steuerung nützliche Größe darstellen.

Die elektrische Dreh- bzw. Wanderfeldmaschine des Antriebssystems ist vorzugsweise eine Asynchronmaschine, eine Synchronmaschine oder eine Reluktanzmaschine, insbesondere für Drei-Phasen-Strom. Eine Asynchronmaschine hat i.a. einen relativ einfach aufgebauten Läufer (i. a. einen Läufer mit Kurzschlußwicklungen oder Wicklungen, deren Enden an Schleifringe geführt sind). Hingegen haben Synchronmaschinen Läufer mit ausgeprägten magnetischen Polen, z.B. Permanentmagnete oder Elektromagnete, die z.B. über Schleifringe mit Strom gespeist werden. Reluktanzmaschinen gehören im weiteren Sinn zu den Synchronmaschinen. Insbesondere bei der Asynchronmaschine erfolgt die Steuerung der elektrischen Maschine vorzugsweise auf der Grundlage einer feldorientierten Regelung (sog. Vektorregelung). Hierbei wird, ausgehend von direkt meßbaren momentanen Größen, wie angelegte Spannung, Ständerstrom und ggf. Drehzahl, anhand eines rechnerischen dynamischen Maschinenmodells der Ständerstrom in eine drehmomentbildende Komponente, die mit dem Läuferfluß das Drehmoment erzeugt, und eine senkrecht dazu verlaufende, den Maschinenfluß erzeugende Komponente rechnerisch zerlegt und so das Drehmoment ermittelt.

Bei der elektrischen Maschine samt zugehöriger Steuereinrichtung handelt es sich um ein Hilfssystem, das z.B. im Triebstrang eines Kraftfahrzeugs mit dem Antriebsaggregat angeordnet ist. Wegen seines Hilfs-Charakters sollte es relativ zum Antriebsaggregat wenig Raum beanspruchen, sollte also möglichst kompakt aufgebaut sein. Andererseits muß die elektrische Maschine zum Direktstarten sehr große Drehmomente aufbringen können. Die im folgenden genannten vorteilhaften Maßnahmen dienen - neben anderen vorteilhaften Zwecken - einem solch kompakten Aufbau.

Eine Maßnahme zur Erzielung hoher Kompaktheit liegt darin, daß die elektrische Maschine eine feine Polteilung, insbesondere wenigstens einen Pol pro 45°-Ständerwinkel aufweist. Bei einer kreisförmig geschlossenen (360°-)Drehfeld-maschine entspricht dies einer Gesamtzahl von wenigstens acht Polen. Besonders vorteilhaft sind noch feinere Polteilungen, entsprechend z.B. 10, 12, 14, 16 oder mehr Polen bei der kreisförmig geschlossenen Maschine. Eine feine Polteilung erlaubt es nämlich, die Wickelköpfe des Ständers klein auszubilden, und zwar sowohl in Axial- wie auch in Umfangsrichtung der Maschine, so daß die Maschine in Axialrichtung insgesamt kürzer ausgebildet sein kann. Auch kann bei feinerer Polteilung der Ständerrücken für den magnetischen Rückfluß dünner (und damit auch leichter) ausgebildet sein, mit der Folge, daß bei gleichem Außendurchmesser der Maschine der Läufer einen größeren Durchmesser haben kann. Größerer Läuferdurchmesser führt wegen des in Umfangsrichtung längeren Luftspaltes und des größeren wirksamen Hebelarms zu einem größeren Drehmoment. Insgesamt führt somit eine feinere Polteilung zu einer kompakteren und leichteren Maschine. Daneben sind wegen der geringeren Wickeldrahtlänge - kleinere Wickelköpfe benötigen weniger nicht-aktiven Wicklungsdraht - die ohmschen Verluste geringer. Da ferner das Streufeld (das den Blindleistungsanteil wesentlich bestimmt) von der Wickelkopffläche abhängt, ist es bei feiner Polteilung relativ gering. Ein geringes Streufeld ist insbesondere bei der Drehungleichförmigkeits-Verringerung vorteilhaft, da hier - anders als bei einer üblichen elektrischen Maschine - dauernd zwischen Motor- und Generatorbetrieb hin- und hergewechselt wird und bei dem damit einhergehenden Umpolen laufend Blindleistung aufgebracht werden muß.

Bei schnell laufenden Drehfeld-Maschinen sind feine Polteilungen unüblich, da sie eine relativ hohe Polwechselfrequenz bedingen. Ein üblicher Wert für die Polwechselfrequenz beträgt beispielsweise 120 Hz. Die im Rahmen der Erfindung verwendete elektrische Maschine hat hingegen vorteilhaft eine hohe maximale Polwechselfrequenz, vorzugsweise zwischen 300 und 1600 Hz und mehr, besonders vorzugsweise zwischen 400 Hz und 1500 Hz.

Um den Einfluß von Wirbelströmen im Ständer - die mit steigender Polwechselfrequenz zunehmen - zu verringern, weist der Ständer vorteilhaft dünne Ständerbleche, vorzugsweise mit einer Dicke von 0,35 mm oder weniger, besonders vorzugsweise 0,25 mm oder weniger auf. Als weitere Maßnahme zur Verringerung der Verluste sind die Ständerbleche vorzugsweise aus einem Material mit niedrigen Ummagnetisierungsverlusten, insbesondere kleiner als 1 Watt/kg bei 50 Hz und 1 Tesla, gefertigt.

Als weitere Maßnahme, die zu einer kompakten Ausbildung beiträgt, weist die elektrische Maschine vorteilhaft eine innere Fluidkühlung auf. Bei dem Fluid kann es sich vorteilhaft um Öl handeln. Eine sehr effektive Kühltechnik besteht darin, die Maschine im Inneren ganz unter Öl zu setzen. Ein Nachteil hiervor ist jedoch, daß oberhalb ca. 500 U/min Turbulenzverluste auftreten, die oberhalb ca. 2000 U/min merkliche Ausmaße annehmen können. Um dem zu begegnen, erfolgt die Zufuhr des Kühlfluids vorteilhaft verlustleistungs- und/oder drehzahlabhängig, wobei es sich bei der Fluidkühlung vorzugsweise um eine Sprühfluidkühlung handelt. In der Maschine befindet sich dann immer nur im wesentlichen soviel Kühlfluid, wie momentan zur Abfuhr der Verlustleistung benötigt wird.

Quantitativ läßt sich die Kompaktheit durch die Größe "Drehmomentdichte" ausdrücken. Vorzugsweise weist die elektrische Maschine eine hohe Drehmomentdichte - bezogen auf das maximale Drehmoment - auf, die besonders vorzugsweise größer als 0,01 Nm/cm³ ist (Anspruch 12).

An einer Welle mit Drehungleichförmigkeiten können oft auch Radialschwingungen auftreten, insbesondere an der Kurbelwelle. Um robust gegenüber Radialschwingungen zu sein, ist das System vorzugsweise so ausgebildet, daß die elektrische Maschine stark im Bereich magnetischer Sättigung arbeitet. Ein Maß für die magnetische Sättigung ist der Strombelag (bei maximalem Drehmoment) im Ständer pro cm Luftspaltlänge in Umfangsrichtung. Vorzugsweise beträgt dieses Maß wenigstens 400 - 1000 A/cm, besonders vorzugsweise wenigstens 500 A/cm. Das Arbeiten stark im Sättigungsbereich erlaubt es, die Maschine mit einem relativ weiten Luftspalt auszubilden. Änderungen des Luftspaltes - wie sie bei Radialschwingungen auftreten - wirken sich wegen des Betriebs im Sättigungsbereich kaum aus.

Eine derart kompakt aufgebaute elektrische Maschine hat im allgemeinen eine relativ geringe Induktivität. Um hier dennoch beispielsweise mit Hilfe einer getakteten Spannung einen möglichst genau sinusförmigen Strom zum Erzeugen der elektrischen Dreh- bzw. Wanderfelder zu erzielen, arbeitet der Wechselrichter vorteilhaft zumindest zeitweise mit einer hohen Taktfrequenz, insbesondere 10 kHz bis 100 kHz und höher. Diese Maßnahme ist auch vorteilhaft zur Erzielung einer hohen zeitlichen Auflösung des Systems: Beispielsweise kann man mit einer Taktfrequenz von 20 kHz eine zeitliche Auflösung im Drehmomentverhalten der elektrischen Maschine von 2 kHz erzielen, mit der man eine Drehungleichförmigkeit bei 200 Hz wirksam verringern kann (200 Hz entsprechen zum Beispiel der vierten Ordnung bei 3000 U/min). Eine hohe Taktfrequenz trägt auch zu einer kompakten Bauweise des Wechselrichters selbst bei, denn sie erlaubt kleinere Zwischenkreiskondensatoren, die mit kurzen Leitungswegen unmittelbar neben den elektronischen Schaltern angeordnet werden können. Ferner können EMV-Filter (EMV: Elektromagnetische Verträglichkeit) des Wechselrichters kleiner ausgeführt sein.

Als weitere vorteilhafte Maßnahme zur Erzielung einer kompakten Bauweise des Wechselrichters sind elektronische Schalter des Wechselrichters fluidgekühlt, vorzugsweise siedebadgekühlt (Anspruch 13). Als Siedebad-Kühlmittel kann beispielsweise ein Fluorkohlenwasserstoff verwendet werden. Bei der Siedebadkühlung verdampft das Kühlmittel an Wärmepunkten und entzieht ihnen dadurch seine relativ hohe Verdampfungswärme. Der Dampf steigt auf und kann z.B. in einem externen Kühler kondensieren und dabei seine Verdampfungswärme abgeben. Diese Kühltechnik erlaubt kompakteste Anordnung der elektronischen Schalter des Wechselrichters ohne jegliche Kühlkörper. Daneben hat sie den Vorteil, daß zur Erreichung auch hoher Kühlleistung relativ geringe Temperaturdifferenzen ausreichen und zwar z.B. eine Differenz von 2-10° C, gegenüber ca. 40° C bei Luftkühlung. Eine weitere kühltechnisch vorteilhafte Maßnahme besteht darin, mehrere elektronische Schalter des Wechselrichters, insbesondere 2 bis 20 und mehr, parallel zu schalten. Die Parallelschaltung führt zu einer verteilten Anordnung der Wärmequellen und damit einer relativ geringen Verlustleistungsdichte.

Der Wechselrichter umfaßt vorteilhaft als Schalter Halbleiterschalter, vorzugsweise schnelle Halbleiterschalter, wie Feldeffekttransistoren - besonders vorzugsweise Metalloxidhalbleiter(MOS)-Feldeffekttransistoren, bipolare Transistoren und/oder bipolare Transistoren mit isoliertem Gateanschluß (IGBTs). Unter "schnellen" Halbleiterschaltern werden insbesondere solche verstanden, die maximale Taktfrequenzen von 10 bis 100 kHz oder mehr erlauben.

Der Wechselrichter erzeugt die für die magnetischen Felder der elektrischen Maschine benötigten Spannungen und/oder Ströme vorzugsweise durch Pulse, insbesondere auf der Grundlage von Pulsweiten- oder Pulsamplitudenmodulation. Bei konstanter Zwischenkreisspannung lassen sich durch sinusbewertete Pulsweitenmodulation bei hohen Taktfrequenzen aufgrund der Maschineninduktivität nahezu sinusförmige Ströme beliebig einstellbarer Frequenz, Amplitude und/oder Phase erzeugen. Bei der Pulsamplitudenmodulation geht man beispielsweise aus von einem Wechselrichter mit variabler Zwischenkreisspannung und erzeugt so Pulse verschiedener Amplituden.

Um bei dem System zu jedem Zeitpunkt die momentane Winkellage der Welle zu kennen, ist die elektrische Maschine oder die Welle vorteilhaft mit einem Läuferlage- bzw. Wellenlage-Geber ausgerüstet. Aus der Information über die momentane Winkellage kann auf die momentane Winkelgeschwindigkeit und -beschleunigung und damit auf momentane Drehungleichförmigkeiten geschlossen werden. Auf dieser Information kann - wie oben ausgeführt wurde - bei einem geregelten System die Drehungleichförmigkeits-Verringerung basieren. Bei einem gesteuerten System wird die Information über die momentane Winkellage und ggf. die momentane mittlere Drehzahl gebraucht, um den richtigen Erwartungswert aus dem Kennfeld auszulesen. Zur Gewinnung einer möglichst genauen Winkellage-Information kann insbesondere ein Drehtransformator (ein sog. Resolver) dienen, also ein Transformator mit winkelabhängigem Übertragungsverhältnis. Auch hochauflösende Kodierer sind für diesen Zweck einsetzbar, z.B. eine Kombination aus einem hochauflösenden Inkrementalgeber und einem einfachen Absolutgeber.

Herkömmlicherweise verwendet man in Antriebssystemen von Kraftfahrzeugen reibschlüssige Kupplungen, welche ein Anfahren des Kraftfahrzeugs mit Drehmomentwandlung ("schleifende Kupplung") in der Anfahrphase ermöglichen. Ihre weitere Aufgabe besteht darin, einen Gangwechsel durch Trennen des Antriebsaggregats von einem Schaltgetriebe und anschließendes Wiederverbinden mit einer durch Reibung bewirkten Drehzahlanpassung von Antriebsaggregat und Getriebe zu erlauben. Bekannt sind ferner hydrodynamische Kupplungen, zum Teil mit Wandlerfunktion.

Anstelle oder ergänzend zu solchen Kupplungen kann vorteilhaft die elektrische Maschine so gestaltet sein, daß sie als elektromagnetische Kupplung im Antriebsstrang und/oder als aktive Getriebe-Synchronisiereinrichtung oder als Teil hiervon wirkt (Anspruch 14). Bei einer "elekromagnetischen Kupplung" erfolgt die Momentübertragung über die Kupplung hinweg durch elektrische, magnetische oder elektromagnetische Kräfte. Es ist möglich, daß diese Art der Kraftübertragung nur zeitweise vorliegt. Zum Beispiel kann nach Erreichen gleicher Drehzahl der zu kuppelnden Wellen die Kraftübertragung von einer mechanischen Kupplung übernommen werden.

Bei einer vorteilhaften Ausgestaltung umfaßt das Antriebssystem für die Funktion der elektromagnetischen Kupplung und/oder der Getriebe-Synchronisiereinrichtung zwei elektrische Maschinen, also eine elektrische Doppelmaschine. Im Normalbetrieb - wenn das Antriebsmoment über den Antriebsstrang Drehmoment abgibt - fungiert die erste elektrische Maschine als Generator und die zweite als Motor, wobei die zum Betrieb des Motors benötigte elektrische Energie im wesentlichen von dem Generator bezogen wird. Die vom Antrieb gelieferte mechanische Drehenergie wird also bei dieser Ausgestaltung zunächst über ein Paar relativdrehender elektromagnetischer Wirkflächen (Ständer und Läufer der ersten elektrischen Maschine) in elektrischen Strom verwandelt und dann über ein zweites Paar relativdrehender elektromagnetischer Wirkflächen (Ständer und Läufer der zweiten elektrischen Maschine) wieder in mechanische Drehenergie, ggf. bei anderer Drehzahl und mit anderem Drehmoment zurückverwandelt. Die von der ersten Maschine abgegebene Energiemenge kann größer oder kleiner als die von der zweiten aufgenommene sein. Der Überschuß bzw. Unterschuß kann z.B. in einem Energiespeicher gespeichert bzw. aus einem solchen entnommen werden. Die beiden Maschinen können durch eine Überbrückungskupplung mechanisch koppelbar sein. Das Starten des Antriebsaggregats erfolgt durch Motorbetrieb der elektrische Maschine.

Bei der anderen vorteilhaften Ausgestaltung wird die Kupplung durch eine einzelne elektrische Maschine gebildet, welche wenigstens zwei drehbare elektromagnetische Wirkeinheiten (Läufer und drehbar gelagerten Ständer) aufweist, von denen eine mit einem antriebsseitigen Drehmomentübertrager z.B. vom Antriebsaggregat kommende Antriebswelle und die andere mit einem abtriebsseitigen Drehmomentübertrager (zum Getriebe führende Abtriebswelle) gekoppelt oder koppelbar ist. Die Maschine entspricht z.B. einer normalen Maschine mit Läufer und Ständer, welche zusätzlich zur Läuferrotation als Ganzes drehbar ist. Die als Ganzes drehbare Maschine kann zwischen Läufer und "Ständer" positive und negative Relativdrehmomente erzeugen. Auf diese Weise kann der Kupplungsschlupf zum Verschwinden gebracht werden und damit die Funktion einer herkömmlichen Kupplung nachgebildet werden.

Die Funktion des Direktstartens sowie eine Reihe von Zusatzfunktionen der elektrischen Maschine sind - da für sie eine feste Abstützung nötig ist - mit gegen Drehung festgelegtem Ständer (oder auch Läufer) erzielbar. Die Festlegung kann mechanisch erfolgen, etwa durch reib- oder formschlüssige Verbindung der Wirkeinheit mit einem drehfesten Teil (z.B. Verbrennungsmotor- oder Getriebegehäuse oder Fahzreugchassis), oder auf elektrischem Wege, indem die besagte Wirkeinheit doppelt vorhanden ist, nämlich einmal permanent drehbar und einmal permanent gegen Drehung festgelegt, und elektrisch eine Umschaltung von der drehbaren zur nicht drehbaren erfolgt. Im Ergebnis entspricht letzteres der mechanischen Festlegung.

Die elektrische Maschine kann auch zur Antriebsschlupfregelung (ASR) dienen. Die Regelung des Antriebsschlupfes wird - im Stand der Technik - derart durchgeführt, daß bei Erreichen eines Grenzwertes des Antriebsschlupfes oder einer zeitlichen Änderung (zeitliche Ableitung) des Antriebsschlupfes das Antriebsmoment verringert wird. Die Verringerung des Antriebsmoments wird entweder durch Verstellung des Verbrennungsmotors, also durch Drosselklappenverstellung oder durch Zündzeitpunktverstellung, oder durch Betätigen einer oder mehrerer Radbremse(n) realisiert. Auch eine Kombination beider Maßnahmen ist bekannt. Insbesondere können zusätzlich zur Verbrennungsmotorverstellung, die bei Überschreiten eines ersten Grenzwertes des Antriebsschlupfes erfolgt, die Radbremsen betätigt werden, wenn ein zweiter, höherer Grenzwert des Antriebsschlupfes erreicht wird. Derartige Regelungen sind einerseits relativ langsam und andererseits relativ schlecht steuerbar, d.h. ein bestimmter zeitlicher Verlauf der Antriebsmomentverringerung ist praktisch nicht erzielbar.

Gemäß einer vorteilhaften Ausgestaltung dient die elektrische Maschine außerdem einer Antriebsschlupfregelung und ist derart ausgelegt, daß mit ihr eine Antriebsschlupfverringerung durch Verkleinerung des Antriebsmoments (des Antriebsaggregats) herbeiführbar ist, insbesondere durch Bremswirkung und/oder - bei als Kupplung wirkender elektrischer Maschine - durch Kupplungsschlupf-Wirkung.

Im übrigen werden in der gesamten vorliegenden Beschreibung Zahlenangaben "x" im Sinn von "wenigstens x", und nur vorzugsweise im Sinn von "genau x" verstanden.

Die Erfindung wird nun anhand von Ausführungsbeispielen und der angefügten schematischen Zeichnung näher erläutert. In der Zeichnung zeigen:
- Fig. 1: eine schematische Darstellung eines Steuerablaufs einer Start-Stop-Automatik;
- Fig. 2: eine unmaßstäblich-schematische Darstellung einer Ausführungsform des Antriebssystems;
- Fig. 3: eine schematische beispielhafte Darstellung der Funktionsweise einer elektrischen Maschine bei aktiver Verringerung von Drehungleichförmigkeiten;
- Fig. 4: eine schematische Schnittdarstellung einer elektrischen Maschine mit Schnittebene senkrecht zur Axialrichtung zur Veranschaulichung verschiedener bei dem System verwendbaren Maschinentypen;
- Fig. 5: einen schematischen Schaltplan eines bei dem System verwendeten Wechselrichters;
- Fig. 6: eine schematische Darstellung einer elektrischen Doppelmaschine;
- Fig. 7: eine Darstellung einer Doppelmaschine gemäß Fig.6 mit gemeinsamem Ständerkörper;
- Fig. 8: eine schematische Darstellung einer elektrischen Maschine mit drehbaren elektromagnetischen Wirkeinheiten;
- Fig. 9: eine schematische Darstellung einer anderen elektrischen Maschine mit drehbaren elektromagnetischen Wirkeinheiten;
- Fig. 10: eine schematische Darstellung einer weiteren elektrischen Maschine mit relativdrehbaren elektromagnetischen Wirkeinheiten und einer feststehenden Wirkeinheit.

In den Figuren tragen im wesentlichen funktionsgleiche Teile gleiche Bezugszeichen.

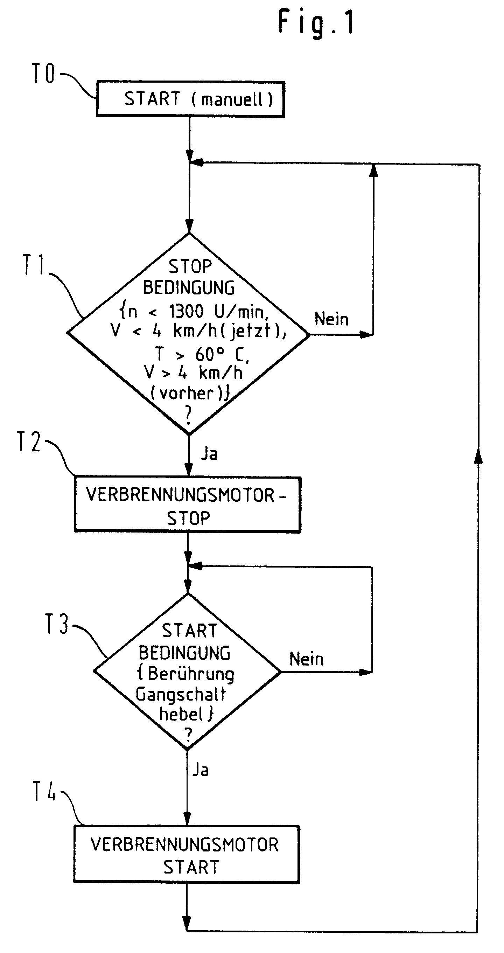

Fig. 1 veranschaulicht schematisch einen Steuerablauf einer Ausführungsform des Antriebssystems. Nach einem manuellen Start eines Verbrennungsmotors (der in den folgenden Figuren die Bezugsziffer 1 trägt) im Schritt T0 wird im folgenden Schritt T1 abgefragt, ob eine Bedingung zum Stoppen des Verbrennungsmotors 1 (sog. Stopbedingung) erfüllt ist. Im einzelnen setzt sich die Stopbedingung aus einer logischen UND-Verknüpfung folgender bestimmter Bedingungen zusammen:
1. Motordrehzahl n ist kleiner als 1300 U/min;
2. Kraftfahrzeug-Fahrgeschwindigkeit V ist kleiner als 4 km/h;
3. Kühlmitteltemperatur T des Verbrennungsmotors 1 ist größer als 60° C;
4. das Fahrzeug ist seit dem letzten (manuellen oder automatischen Start) wenigstens einmal schneller als 4 km/h gefahren; und
5. der Batterieladezustand ist für weitere Starterbetätigungen ausreichend (diese Bedingung ist in Fig. 1 nicht dargestellt).

Falls die Antwort auf diese Abfrage Nein ist, mündet der Steuerablauf wieder oben zwischen den Schritten T0 und T1 ein, so daß die Abfrage im Schritt T1 nach Art einer Quasi-Endlosschleife bis zum Eintreten der Stopbedingung wiederholt ausgeführt wird. Falls die Antwort hingegen Ja ist, wird der Verbrennungsmotor 1 im Schritt T2 automatisch gestoppt, z.B. durch Unterbrechen der Kraftstoffzufuhr.

Im anschließenden Schritt T3 wird abgefragt, ob eine Bedingung zum Starten des Verbrennungsmotors 1 (sog. Startbedingung) erfüllt ist. Die Startbedingung kann beispielsweise die Bedingung "Berührung des Gangschalthebels durch Benutzer ?" sein. Falls die Antwort auf diese Abfrage Nein ist, mündet der Steuerablauf wieder oben zwischen den Schritten T2 und T3 ein, so daß die Abfrage im Schritt T3 nach Art einer Quasi-Endlosschleife wiederholt ausgeführt wird, solange bis die Startbedingung erfüllt ist. Falls die Antwort auf die Abfrage hingegen Ja ist, wird der Verbrennungsmotor 1 im Schritt T4 automatisch wieder gestartet, und zwar durch eine direkt mit der Triebwelle des Verbrennungsmotors gekoppelte elektrische Maschine (welche in den folgenden Figuren die Bezugsziffer 4 trägt). Der Verbrennungsmotor 1 wird außerdem notgestartet, wenn seine Temperatur unter die Betriebstemperatur abnimmt oder der Ladezustand der Batterie aufgrund eingeschalteter Stromverbraucher unter einen bestimmten Grenzwert absinkt. Um hierbei ein unbeabsichtiges Anfahren des Kraftfahrzeugs auszuschließen, wird jedoch das Erfülltsein der Bedingung "Kein Gang eingelegt" gefordert.

Anschließend mündet der Steuerablauf wieder oben zwischen den Schritten T0 und Tl ein, so daß der Steuerablauf wieder von vorne beginnt, also im folgenden wieder abgefragt wird, ob die Stopbedingung vorliegt. In beiden o.g. Quasi-Endlosschleifen ist außerdem noch eine (nicht gezeigte) Abfrage vorhanden, ob ein manueller Stop (etwa durch Drehen eines Zündschlüssels) durchzuführen ist. Falls in der jeweiligen Schleife die Antwort Nein ist, wird sie weiter durchlaufen. Falls die Antwort Ja ist, endet der Steuerablauf.

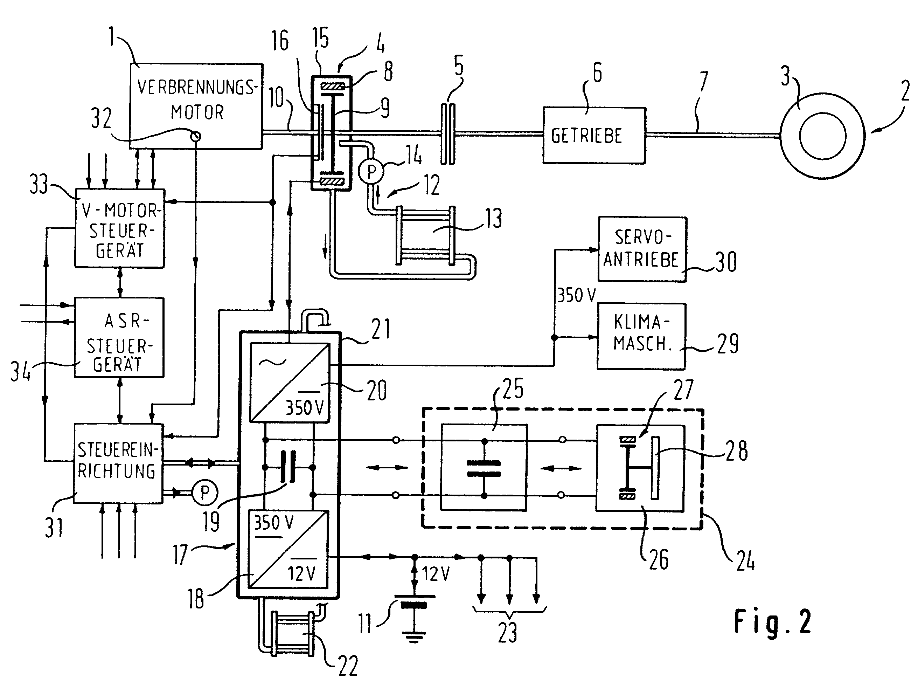

Das in Fig. 2 dargestellte Antriebssystems eines Kraftfahrzeugs, z.B. eines Personenkraftwagens, weist als Antriebsaggregat einen Verbrennungsmotor 1 auf, bei dem es sich beispielsweise um einen Vierzylinder-Viertakt-Otto- oder Dieselmotor handelt. Das vom Verbrennungsmotor 1 erzeugte Drehmoment kann über einen Antriebsstrang 2 auf Antriebsräder 3 übertragen werden. In Abtriebsrichtung ist im Antriebsstrang 2 nach dem Verbrennungsmotor 1 zunächst eine elektrische Maschine 4 angeordnet. Auf diese folgen eine Fahrkupplung 5, ein Getriebe 6 und ein Achsantrieb 7, welcher das Drehmoment auf die Antriebsräder 3 überträgt. Bei der Kupplung 5 und dem Getriebe 6 kann es sich um eine Reibungskupplung und ein Schaltgetriebe handeln; alternativ sind z.B. eine automatische Kupplung oder Wandlerkupplung, jeweils mit Schaltgetriebe oder automatischem Getriebe möglich. Bei anderen (nicht gezeigten) Ausführungsformen ist im Antriebsstrang 2 zwischen Verbrennungsmotor 1 und elektrischer Maschine 4 eine weitere (durch Steuerung betätigte) Kupplung angeordnet, um beim Bremsen mit der elektrischen Maschine 4 einen Mitlauf des Verbrennungsmotors 1 zu vermeiden.

Die elektrische Maschine 4 - hier eine Drehstrom-Wanderfeld-Maschine in Asynchron- oder Synchron-Bauart - umfaßt einen Ständer 8 und einen Läufer 9. Ersterer stützt sich drehfest gegen den Verbrennungsmotor 1, ein (nicht gezeigtes) Fahrzeugchassis oder ein (nicht gezeigtes) Kupplungsgehäuse ab, wohingegen letzterer direkt auf einer Triebwelle (Kurbelwelle) 10 des Verbrennungsmotors 1 oder einer Verlängerung hiervon sitzt und mit dieser drehfest gekoppelt ist. Die Triebwelle 10 und der Läufer 9 rotieren also gemeinsam, ohne Zwischenschaltung eines Getriebes.

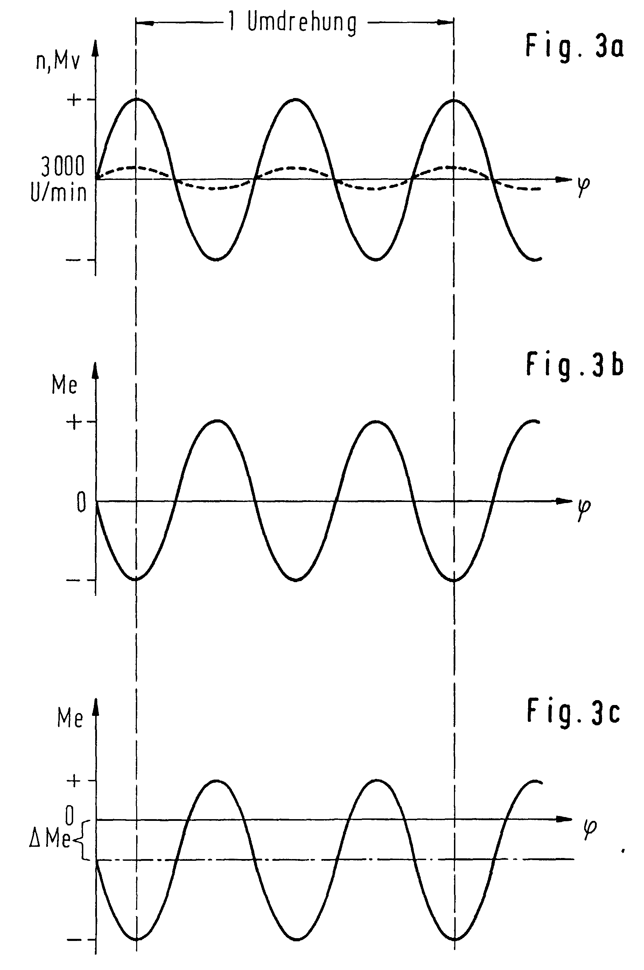

Die elektrische Maschine 4 erfüllt mehrere Funktionen: Sie fungiert einerseits als Starter, wie im Zusammenhang mit Fig. 1 bereits erläutert wurde. Andererseits fungiert sie als aktiver Drehungleichförmigkeits-Verringerer, wie anhand von Figur 3 noch näher erläutert wird. Ferner fungiert sie als Generator zur Ladung einer Fahrzeugbatterie 11 und zur Versorgung elektrischer Verbraucher und ersetzt damit eine herkömmlicherweise im Kraftfahrzeug vorhandene Lichtmaschine. Die Generatorfunktion kann ferner zum Abbremsen des Fahrzeugs oder des Verbrennungsmotors 1 dienen. Außerdem kann die elektrische Maschine 4 als Zusatzmotor ("Booster") fungieren, z.B. um den Verbrennungsmotor beim Beschleunigen des Fahrzeugs zu unterstützen. Schließlich fungiert sie aufgrund des Massenträgheitsmoments des Läufers 9 als Schwungrad und kann so das bei herkömmlichen Kraftfahrzeugen i.a. für diesen Zweck vorhandene, auf der Kurbelwelle sitzende Schwungrad ersetzen.

Die elektrische Maschine 4 ist durch eine Flüssigkeitskühlung, hier eine Sprühflüssigkeitskühlung 12 innengekühlt. Nach Durchlaufen eines Kühlers 13 und einer Pumpe 14 wird das Kühlflüssigkeit - hier ein geeignetes Öl - an den Läufer 9, und zwar in der Nähe von dessen Rotationsachse, gesprüht. Sie wandert aufgrund der Läuferrotation fliehkraftbedingt nach außen und kühlt dabei Läufer 9 und Ständer 8, und verläßt dann ein Gehäuse 15 der elektrischen Maschine 4, um in einem geschlossenen Kreislauf wieder in den Kühler 13 einzutreten. Der Kühlmittelfluß erfolgt verlustleistungs- und drehzahlabhängig durch entsprechende Steuerung der Pumpe 14, derart, daß sich jeweils im wesentlichen nur eine gerade benötigte Mindestmenge der Kühlflüssigkeit im Inneren des Gehäuses 15 befindet. Ein (nicht gezeigtes) Ausgleichsgefäß erlaubt diese Variation der Kühlflüssigkeitsmenge im Gehäuse 15. Bei anderen (nicht gezeigten) Ausführungsformen ist die elektrische Maschine (oder nur der Läufer) in ein Kupplungs- und/oder Getriebegehäuse integriert und wird durch ein darin befindliches Schmier- und/oder Kühlfluid (z.B. Kupplungs- oder Getriebeöl) mit gekühlt.

Die elektrische Maschine 4 ist außerdem mit einem Drehtransformator 16 (sog. Resolver) ausgerüstet, der vorzugweise mehr als 8 Pole, hier z.B. 12 Pole auweist. Er besteht aus zwei benachbart angeordneten Leiterplatten, von denen eine feststeht und die andere sich mit der Triebwelle 10 dreht. Die Leiterplatten tragen auf ihren zugewandten Oberflächen durch Leiterbahnen gebildete Windungen, derart daß sich ein drehwinkelabhängiges Transformator-Übersetzungsverhältnis ergibt. Der Drehtransformator 16 arbeitet nach dem Transponder-Prinzip: Die feststehenden Windungen (festehende Platine) werden aktiv mit Strom/Spannung beaufschlagt und strahlen elektromagnetische Energie zu den drehbaren Windungen (drehbare Platine) hin ab. Letztere strahlen einen Teil dieser Energie wieder zurück, wobei dieser Teil aufgrund des drehwinkelabhängigen Übertragungsverhältnisses vom Drehwinkel abhängt. Der rückgestrahlte Teil erzeugt in den feststehenden Windungen ein drehwinkelabhängiges Signal. Eine Auswertung dieses Signals liefert den momentanen Drehwinkel der Triebwelle 10 mit einer Genauigkeit von wenigstens 0,5 Grad. Bei einfacheren Ausführungsformen wird ein Inkrementalgeber verwendet oder völlig auf einen entsprechenden Geber verzichtet.

Ein Wechselrichter 17 liefert dem Ständer 8 der elektrischen Maschine 4 bei einer sehr hohen Taktfrequenz (z.B. 10-100 kHz) sinusbewertete pulsweitenmodulierte Spannungsimpulse, die unter der Wirkung der Maschineninduktivität im wesentlichen sinusförmige Dreiphasen-Ströme ergeben, deren Amplitude, Frequenz und Phase frei vorwählbar ist.

Der Wechselrichter 17 ist ein Spannungszwischenkreis-Pulswechselrichter und umfaßt drei Baugruppen: einen Gleichspannungsumsetzer 18 (Eingangsbaugruppe), welcher Gleichspannung von einem niedrigen Niveau (hier 12 V) auf ein höheres Zwischenkreisniveau (hier 60 V oder 350 V) und in umgekehrter Richtung umsetzt, einen elektrischen Zwischenkreisspeicher 19, hier ein Kondensator bzw. eine Anordnung parallel geschalteter Kondensatoren, und einen Maschinen-wechselrichter 21 (Ausgangsbaugruppe), welcher aus der Zwischenkreis-Gleichspannung die (getaktete) Dreiphasen-Wechselspannung variabler Amplitude, Frequenz und Phase erzeugen kann oder - bei generatorischem Betrieb der elektrischen Maschine 4 - derartige beliebige Wechselspannungen in die Zwischenkreis-Gleichspannung umsetzen kann. Bei anderen (nicht gezeigten) Ausführungsformen liegt das Zwischenkreisniveau am oberen Rand des ohne besonderen Berührungsschutz zulässigen Niederspannungsbereichs, hier 60 V.

Die drei Baugruppen 18, 19, 20 des Wechselrichters 17 sind in einem metallischen Gehäuse 21 hermetisch eingeschlossen, welches mit einem geeigneten Siedekühlmittel gefüllt ist. Bei diesem handelt es sich z.B. um einen Fluorkohlenwasserstoff, der bei einem geeigneten Druck (etwa zwischen 50 mbar und 3 bar) einen geeigneten Siedepunkt, z.B. bei 60° C, hat. Verdampftes Siedekühlmittel kann in einem Kondensationskühler 22 kondensieren und in flüssiger Form in einem geschlossenen Kreislauf in das Gehäuse 21 zurückkehren. Das Gehäuse 21 mit dem Kühlkreislauf ist hermetisch dicht.

Der Gleichspannungsumsetzer 18 ist niederspannungsseitig mit der Fahrzeugbatterie 11 und verschiedenen Niederspannungverbrauchern 23, wie beispielsweise Beleuchtung und elektronische Geräte, verbunden. Der Wechselrichter 17 kann einerseits Strom auf niedrigem Spannungsniveau zum Laden der Fahrzeugbatterie 11 und Versorgen der Niederspannungsverbraucher 23 liefern, andererseits kann er der Fahrzeugbatterie 11 Strom auf niedrigem Spannungsniveau zum Starten des Verbrennungsmotors 1 entnehmen. Bei anderen (nicht gezeigten) Ausführungsformen befindet sich die Fahrzeugbatterie auf Zwischenkreisniveau und ist direkt mit dem Zwischenkreis gekoppelt.

Der Zwischenkreisspeicher 19 ist verbunden mit einem externen Zusatzspeicher 24, bei dem es sich um einen elektrischen Speicher, hier eine Zusatzkapazität 25, und/oder einen Schwungradspeicher 26 handeln kann. Der Zusatzspeicher 24 hat die Aufgabe, die beim Drehungleichförmigkeits-Verrringern in einer Bremsphase gewonnene Energie zwischenzuspeichern und für die anschließende Antreibphase wieder abzugeben. Daneben kann er auch der Speicherung derjenigen Energie dienen, die bei anderen, durch die elektrische Maschine 4 vermittelten Bremsvorgängen anfällt. Schließlich kann er die Fahrzeugbatterie 11 beim Starten des Verbrennungsmotors 1 entlasten, indem dieser Energie nur langsam entnommen und im Zusatzspeicher 24 gespeichert wird. Hier steht sie dann für eine schnelle Entnahme beim Starten zur Verfügung.

Hingegen hat der (innere) Zwischenkreisspeicher 19 im wesentlichen die Aufgabe, der Maschinen-Wechselrichtergruppe 20 Spannung mit der für das Takten notwendigen hohen Flankensteilheit - also schnell - zu liefern. Er braucht dazu keine sehr hohe Kapazität (er hat z.B. 2 µF), vorteihaft für die Schnelligkeit sind vielmehr geringe Zuleitungsinduktivitäten, was durch die Anordnung im Inneren des Wechselrichters 17 sichergestellt ist (und zwar vorzugsweise auf derselben Platine, auf der auch die elektronischen Schalter des Maschinen-Wechselrichters 20 angeordnet sind). Der Zusatzspeicher 24 kann hingegen relativ langsam arbeiten, so daß hier die Zuleitungskapazitäten aufgrund der externen Anordnung nicht stören. Die Zusatzkapazität 25 kann insbesondere 50 bis 10000 mal größer sein (sie ist hier z.B. 4,7 mF für die Speicherung der Drehungleichförmigkeits-Energie) als die des Zwischenkreisspeichers 19.

Noch größere Speicherkapazitäten sind mit dem Schwungradspeicher 26 erreichbar, der hier eine eigene wechselrichtergesteuerte elektrische Maschine 27 und eine damit gekoppelte Schwungmasse 28 umfaßt. Letztere kann durch ein gesondertes Schwungrad gebildet oder in den Läufer der elektrischen Maschine 27 integriert sein. Das Massenträgheitsmoment der Schwungmasse 28 beträgt vorzugsweise 0,05 bis 2 kgm². Es ist auch möglich, in dem Schwungradspeicher 26 ein Mehrfaches der zum Starten des Verbrennungsmotors 1 benötigten Energie zu speichern und ihm zum Starten schnell (d.h. in weniger als einer Sekunde) die jeweils nötige Startenergie zu entnehmen.

Der Zwischenkreis mit seinem hohen Spannungsniveau (hier 60 V oder 350 V) versorgt verschiedene Hochleistungsverbraucher, wie eine Klimamaschine 29 und Servoantriebe 30 mit elektrischer Energie. Während derartige Hochleistungsverbraucher herkömmlicherweise durch mechanische Kopplung vom Verbrennungsmotor 1 angetrieben werden, erlaubt das hier zur Verfügung stehende hohe Spannungsniveau einen wirkungsgradmäßig günstigeren, rein elektrischen Antrieb.

Eine Steuereinrichtung 31 gibt dem Wechselrichter 17 durch entsprechende Ansteuerung seiner Halbleiterschalter zu jedem Zeitpunkt vor, welche Amplitude, Frequenz und Phase die von ihm zu erzeugende Wechselspannung haben soll. Die Steuereinrichtung 31, die beispielsweise durch ein entsprechend programmiertes Mikrocomputer-System gebildet sein kann, bestimmt zunächst den Betrag und die Richtung des Drehmoments, welches die elektrische Maschine 4 zu einem bestimmten Zeitpunkt erzeugen soll. Sie kann dies z.B. zum Starten auf der Grundlage gespeicherter Werte tun, die den zeitlichen Soll-Verlauf der Drehzahl oder des Drehmoments der elektrischen Maschine 4 während des Startvorgangs vorgeben, ggf. ergänzt durch eine Messung dieser Größen und eine rückgekoppelte Regelung, welche die Einhaltung der Vorgaben sicherstellt. Für die aktive Drehungleichförmigkeits-Verringerung kann sie dies z.B. mit Hilfe einer Kennliniensteuerung tun, indem sie als Eingangsinformation vom Drehtransformator 16 die Winkelstellung der Triebwelle 10, die momentane mittlere Drehzahl und ggf. weitere Betriebsparameter, wie z.B. die Drosselklappenstellung, erhält und aus einem gespeicherten Kennfeld die momentan zu erwartende Drehungleichförmigkeit in Abhängigkeit von diesen Betriebsparametern ermittelt. Eine andere Möglichkeit besteht darin, die tatsächlich momentan vorliegende Drehungleichförmigkeit zu ermitteln, z.B. durch Berechnung der momentanen Drehgeschwindigkeit auf der Grundlage der vom Drehtransformator 16 gelieferten Information und/oder durch Auswertung der momentan im Verbrennungsmotor 1 vorliegenden Gasdrücke, welche mit Hilfe von Gasdrucksensoren 32 detektierbar sind, sowie durch Erfassung der momentanen Drehmoments des Verbrennungsmotors 1 mit Hilfe einer (nicht gezeigten) Drehmomentnabe im Antriebsstrang. Möglich ist auch eine Kombination von Regelung und Steuerung. Aus dem so ermittelten Wert für die momentane Drehungleichförmigkeit wird ein entsprechender (gegenphasiger) Wert für das schnell variierende Soll-Drehmoment der elektrischen Maschine 4 abgeleitet, dem ggf. ein positives oder negatives Gleich-Drehmoment gewünschter Stärke additiv überlagert wird.

In einem zweiten Schritt bestimmt die Steuereinrichtung 31, welche Amplitude, Frequenz und Phase der Spannung bzw. des Stroms vom Wechselrichter 17 bereitgestellt werden muß, damit die elektrische Maschine 4 dieses Soll-Gesamtdrehmoment herbeiführt. Diese Bestimmung erfolgt bei der elektrischen Asynchronmaschine auf der Grundlage einer feldorientierten Regelung, welche auf einer Modellrechnung der elektrischen Maschine 4 beruht und als Eingangsinformation im wesentlichen die meßbaren elektrischen Ständergrößen (Amplitude, Frequenz und Phase von Strom und Spannung) und die momentane mittlere Läuferdrehzahl verwendet.

In Fig. 2 ist die Steuereinrichtung 31 als außerhalb des Wechselrichtergehäuses 21 angeordnet dargestellt. Um die Zuleitungsinduktivitäten gering zu halten und auch an der Siedebadkühlung zu partizipizieren, ist sie jedoch bei anderen (nicht gezeigten) Ausführungsformen im Inneren des Wechselrichtergehäuses 21 angeordnet.

Die Steuereinrichtung 31 teilt verschiedene, zur Erfüllung ihrer Steueraufgaben dienende Sensoren bzw. davon abgeleitete Sensorinformationen mit einem Motorsteuergerät 33 zur Steuerung des Verbrennungsmotors 1. Im einzelnen handelt es sich z.B. um den Drehtransformator 16 (Winkellagegeber), die Gasdrucksensoren 32, daneben (nicht gezeigte) Sensoren zur Erfassung der mittleren Drehzahl, des Lastzustandes des Verbrennungsmotors 1 (z.B. über die Drosselklappenstellung) und dessen Drehmoments (z.B. mit Hilfe einer Drehmomentnabe).

Außerdem kommuniziert die Steuereinrichtung 31 mit einer Vielzahl weiterer Steuergeräte: ein (nicht gezeigtes) Energieverbrauchs-Steuergerät gibt an, wieviel Energie zum Laden der Fahrzeugbatterie 11, zur Versorgung der Niederspannungsverbraucher 23 und der Hochleistungsverbraucher 29, 30 benötigt wird, so daß die Steuereinrichtung 31 eine entsprechende globale Drehmomentverstellung AMe (siehe Fig. 3c) veranlassen kann. Das Motorsteuergerät 33 führt die Start-Stop-Steuerung durch und gibt der Steuereinrichtung 31 vor, ob die elektrische Maschine 4 den Verbrennungsmotor 1 starten soll. Während der Verbrennungsmotor 1 läuft, gibt sie ihr vor, ob sie die Schwingungsverringerungs-Funktion ausüben soll. Ferner gibt sie ihr vor, ob sie fahrzeugbeschleunigend oder -bremsend wirken soll, so daß sie eine entsprechende globale Drehmomentverschiebung ΔMe veranlassen kann (siehe Fig. 3) und ggf. die Drehungleichförmigkeitsverringerungs-Funktion vorübergehend abschalten kann. Ein ASR-Steuergerät 34 (ASR=Antriebs-Schlupf-Regelung) gibt der Steuereinrichtung 31 bei Vorliegen von Antriebsschlupf vor, daß die elektrische Maschine 4 vorübergehend als generatorische Bremse wirken soll, ggf. bevor das ASR-Steuergerät bei verbleibendem Antriebsschlupf als massivere Maßnahme ein Einbremsen der betroffenen Antriebsräder durch die Radbremse veranlaßt. Zusätzlich kann das ASR-Steuergerät seine Schlupfinformation an das Motorsteuergerät 33 übergeben, um außerdem eine Verringerung des Verbrennungsmotor-Drehmoments zu veranlassen. Bei anderen (nicht gezeigten) Ausführungsformen übernimmt die Steuereinrichtung 31 die Start-Stop-Steuerung.

Die Steuerung der Start-Stop-Automatik und des Verbrennungsmotors 1 erfolgt in Abhängigkeit von verschiedenen veränderlichen Größen: Zum einen in Abhängigkeit von benutzergesteuerten Größen, wie Fahrpedalstellung (und damit ggf. Drosselklappenstellung), vorgewählte Fahrgeschwindigkeit, gewählte Getriebe-Gangstufe, Brems- und Kupplungsbetätigung und Fahrcharakteristik in der Fahr-Vorgeschichte (z.B. sportliche Fahrcharakteristik); zum anderen Betriebsgrößen, wie Drehzahl, Kurbelwellenwinkel, Drehmoment, Gasdruck, Klopfen, Antriebsschlupf, Kühlmitteltemperatur, Abgaszusammensetzung, Abgaszusammensetzung, Fahrgeschwindigkeit. All diese Steueraufgaben können von der sehr leistungsfähigen Steuereinrichtung 31 für die elektrische Maschine 4 mit übernommen werden.

Bei anderen (nicht gezeigten) Ausführungsformen übernimmt ein - von einem herkömmlichen Motor-Managementsystem abgeleitetes - Motor-Steuergerät (ähnlich 33 in Fig.2) die Steuerung der elektrischen Maschine 4. Dort kann daher die Steuereinrichtung 31 entfallen.

Bei jeder Art von Bremswirkung gewonnene Energie wird im Zusatzspeicher 24 gespeichert, um zum späteren Antreiben der elektrischen Maschine 4 wiederverwendet oder der Fahrzeugbatterie 11 zugeleitet zu werden.

Fig. 3a veranschaulicht die aktive Drehungleichförmigkeits-Verringerung. Die durchgezogene Linie zeigt die Drehzahl n der Triebwelle 10 als Funktion des Kurbelwellenwinkels ϕ. Die Welle führt um eine mittlere Drehzahl (hier 3000 Umdrehungen pro Minute) periodisch Drehzahlschwankungen zu kleineren und größeren Drehzahlen hin aus, welche in diesem idealisierten Beispiel insgesamt einen im wesentlichen sinusförmigen Verlauf haben. Bei der Triebwelle 10 handelt es sich beispielsweise um die Kurbelwelle eines Vierzylinder-Viertakt-Verbrennungsmotors eines Kraftfahrzeugs, die in der zweiten Ordnung (d.h. bei einer Frequenz von 100 Hz) eine relativ große, von den Gas- und Massenkräften herrührende Drehungleichförmigkeit aufweist. Zur Veranschaulichung ist auch das für eine Umdrehung der Welle benötigte Winkelintervall eingezeichnet. Im allgemeinen treten bei einer Welle außerdem (hier nicht dargestellte) Drehungleichförmigkeiten höherer Ordnungen und solche stochastischer Natur auf. Ihr Verlauf ist also i.a. nicht sinusförmig.

Im wesentlichen proportional zu den Drehungleichförmigkeiten sind Schwankungen des Drehmoments Mv des Verbrennungsmotors 1 um ein mittleres Drehmoment. Die durchgezogene Linie in Fig. 3a veranschaulicht damit auch den Verlauf des Motor-Drehmoments Mv als Funktion des Kurbelwellenwinkels ϕ.

Fig. 3b veranschaulicht das Gesamt-Drehmoment Me als Funktion des Wellenwinkels ϕ, das von einer mit der Welle gekoppelten elektrischen Maschine aufgebracht wird. Der Verlauf des Maschinendrehmoments Me entspricht weitgehend dem der Drehungleichförmigkeit und des Motor-Drehmoments Mv, ist jedoch entgegengesetzt gerichtet. D.h., bei einer Drehungleichförmigkeit zu höheren Drehzahlen hin (sog. positive Drehungleichförmigkeit) erzeugt die elektrische Maschine ein die Welle bremsendes Drehmoment (sog. negatives Drehmoment), wohingegen sie bei einer Drehungleichförmigkeit zu niederen Drehzahlen hin (sog. negative Drehungleichförmigkeit) ein antreibendes Drehmoment (sog. positives Drehmoment) erzeugt. Der Betrag des Drehmoments Me ist so gewählt, daß die Drehungleichförmigkeit - und die zu ihr proportionale Schwankung des Drehmoments Mv - durch dessen Wirkung wesentlich verringert wird oder sogar praktisch verschwindet, wie in Fig. 3a durch die gestrichelte Linie veranschaulicht ist.

Bei der in Fig. 3b gezeigten Betriebsweise sind die negativen und positiven Drehmomentextrema betragsmäßig gleich groß. Die bei einer Bremsphase gewonnene Energie ist also im wesentlichen gleich groß wie die bei der folgenden Antriebsphase aufzuwendende Energie. Der Energiefluß nach außen ist somit Null, es wird nur im Inneren des System zeitweise Bremsenergie zwischengespeichert. Das System arbeitet also in dieser Betriebsweise als reiner Drehungleichförmigkeits-Verringerer mit schnell variierendem Drehmoment, ohne Erzeugung eines Gleich-Drehmoments.

Ein Beispiel für eine demgegenüber modifizierte Betriebsweise des Systems mit Gleich-Drehmoment ist in Fig. 3c gezeigt: Der zeitliche Verlauf des Gesamt-Drehmoments Me entspricht dem von Fig. lb, es ist jedoch global um einen bestimmten Betrag ΔMe (den sog. Hub) in negative Richtung verschoben. Der Hub ΔMe wird im allgemeinen langsam variieren, in dem hier dargestellten kurzen Zeitrahmen von ungefähr einer Umdrehungsperiode ist er jedoch in guter Näherung konstant. Der Hub ΔMe ist hier kleiner als die Amplitude der schnelle Variation des Drehmoments, so daß das Gesamt-Drehmoment Me alternierend positive und negative Werte annimmt. Gemittelt über die schnelle Drehmomentvariation erhält man ein konstantes Drehmoment -ΔMe. Dem Verbrennungsmotor wird also im Mittel mechanische Energie entzogen, die weitgehend in elektrische Energie umgewandelt und dem System entnommen wird. Die elektrische Maschine hat also in dieser Betriebsart neben der Funktion als Drehungleichförmigkeits-Verringerer die Funktion eines elektrischen Generators, der als Bremse wirken kann und Strom z.B. zum Ausgleichen der Betriebsverluste des Systems, zum Laden der Fahrzeugbatterie und/oder zum Betreiben elektrischer Verbraucher liefern kann.

Falls der Hub ΔMe größer als die Amplitude zur Verringerung der Drehungleichförmigkeit ist, wirkt die elektrische Maschine nur noch bremsend und nicht mehr antreibend, wobei die Bremswirkung in ihrem Betrag entsprechend Fig. 3b und 3c gegenphasig zur Drehungleichförmigkeit variiert.

Allein durch eine entsprechende Einstellung der (Software-)Steuerung der elektrischen Maschine 4 - ohne jegliche konstruktive (Hardware-)Änderungen - sind kleine und sehr große Generatorleistungen einstellbar. Begrenzend wirkt nur die Größe der elektrischen Maschine 4. Damit kann ein und der selbe Maschinentyp beispielsweise für kleine und große Kraftfahrzeugtypen ohne konstruktive Anpassung verwendet werden.

Der globale Drehmomentverlauf kann auch in positiver Richtung verschoben sein (positiver Hub). Die elektrische Maschine 4 arbeitet dann neben ihrer Funktion als Drehungleichförmigkeits-Verringerer als (antreibender) Motor, z.B. um den Verbrennungsmotor 1 bei einer Fahrzeugbeschleunigung zu unterstützen. Während der Starterfunktion ist die Drehungleichförmigkeitsverringerung im allgemeinen inaktiviert, es wird als nur ein positives Gleich-Drehmoment erzeugt.

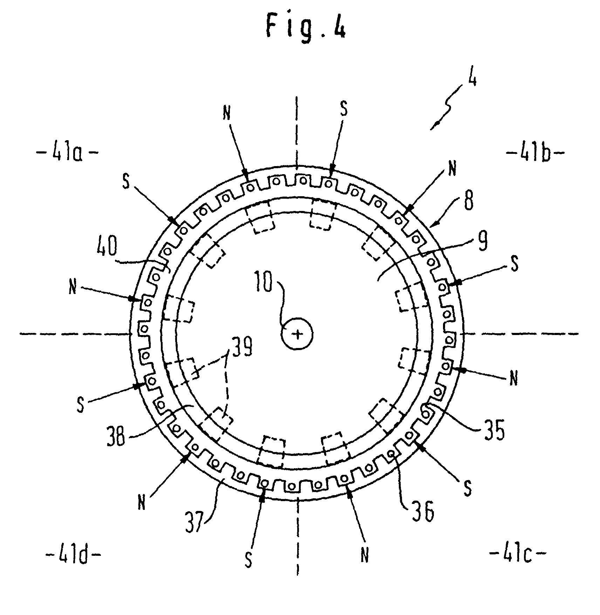

Die in Fig. 4 näher dargestellte elektrische Maschine 4 ist bürsten- bzw. schleiferlos und damit verschleißfrei. Sie hat einen Außendurchmesser von ungefähr 250 mm und eine Länge in Axialrichtung von 55 mm und erbringt bei einem Gewicht von 10-15 kg ein Dauerdrehmoment von ca. 50 Nm und ein Spitzendrehmoment von ca. 150 Nm. Sie kann Drehzahlen erreichen, die den Spitzendrehzahlen üblicher Verbrennungsmotoren (ca. 6000 bis 10000 U/min) entspricht und ist drehzahlfest bis 14000 U/min. Die elektrische Maschine 4 hat einen außenliegenden Ständer 8, welcher Nuten 35 in Richtung der Triebwelle 10 (Axialrichtung) aufweist. Der Ständer 8 trägt eine Drei-Phasen-Wicklung 36, die so ausgebildet ist, daß sie bei Beaufschlagung mit Drei-Phasen-Strom zwölf Pole ausbildet. Pro Pol sind drei Nuten 35, insgesamt also sechsunddreißig Nuten 35 vorhanden. (Bei anderen (nicht gezeigten) Ausführungsformen sind zwecks Verringerung von Streueffektenpro Pol wenigstens 6, vorzugsweise neun Nuten vorhanden.) Die Pole laufen mit der Drehstrom-Oszillation in einer Kreisbewegung im Ständer 8 um. Für einen bestimmten Zeitpunkt ist ihre momentane Lage durch Pfeile, welche die Bezugszeichen "S" (für Südpol) und "N" (für Nordpol) tragen, veranschaulicht. Ein die Nuten 35 nach außen abschließender Rücken 37 ist in Radialrichtung relativ dünn, seine Dicke beträgt (an der Stelle einer Nut 35) vorzugsweise 3-25 mm. Der Ständer 8 ist aus dünnen Statorblechen (die Dicke beträgt hier 0,25 mm) aus einem Material mit niedrigen Ummagnetisierungsverlusten (hier kleiner als 1 W/kg bei 50 Hz und einem Tesla) aufgebaut, mit senkrecht zur Axialrichtung verlaufenden Blechebenen.

Der innenliegende Läufer 9 ist bei der Asynchron-Maschine als Käfigläufer mit im wesentlichen in Axialrichtung verlaufenden Käfigstäben, die jeweils stirnseitig mit einem Kurzschlußring 38 verbunden sind, ausgebildet. Beim der Synchronmaschine trägt der Läufer 9 eine entsprechende Zahl von Polen wie der Ständer 8 (hier zwölf Pole), die durch Permanentmagnete oder entsprechend erregte Spulen gebildet sein können. In Fig. 4 ist die Synchronmaschine ebenfalls veranschaulicht, indem die bei ihr vorhandenen Läuferpole (Bezugsziffer 39) schematisch angedeutet sind.

Der Luftspalt 40 zwischen Läufer 9 und Ständer 8 ist relativ groß; seine Weite beträgt 0,25 bis 2,5 mm, vorzugsweise 0,5 bis 1,5 mm.

Bei anderen (nicht gezeigten) Ausführungsformen ist der Läufer außenliegend und der Ständer innenliegend.

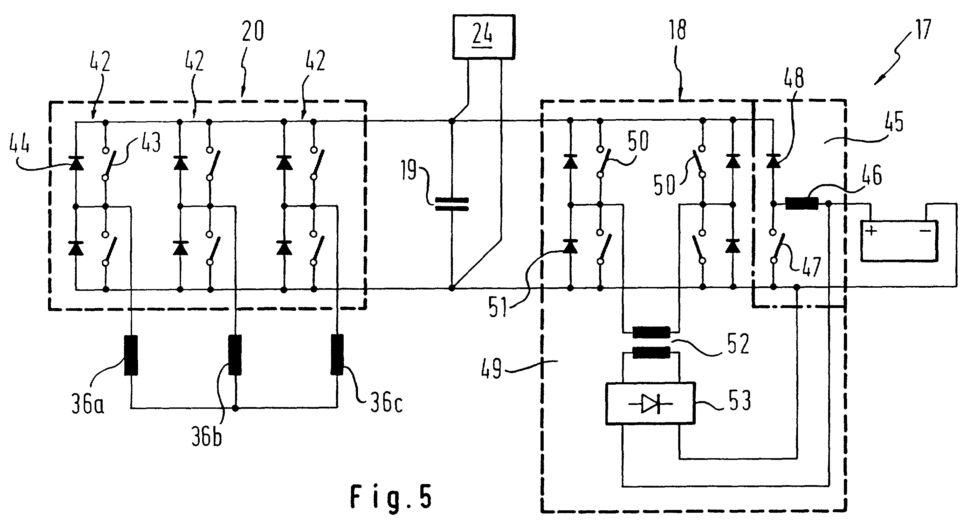

Fig. 5 zeigt einen schematischen Schaltplan des Wechselrichters 17. Man erkennt den Zwischenkreisspeicher 19 in Form einer Kapazität, welcher der (hier nicht näher dargestellte) Zusatzspeicher 24 parallelgeschaltet ist. Die Kapazität symbolisiert eine Parallelschaltung mehrerer Kondensatoren.

Der Maschinenwechselrichter 20 wird durch drei parallelgeschaltete (aber unabhängig schaltbare) Schaltergruppen 42 gebildet, wobei jede der Schaltergruppen 42 für die Erzeugung jeweils einer der drei Drei-Phasen-Spannungen zuständig ist. Jede der Schaltergruppen 42 ist eine Serienschaltung zweier (unabhängig schaltbarer) Schalter 43 zwischen dem Plus- und dem Minuspol des Zwischenkreises. Die Serienschaltung ist mittig (d.h. zwischen den Schaltern 43) mit einer Seite jeweils einer der drei Wicklungen 36a, 36b, 36c der Drei-Phasenwicklung 36 verbunden; an der anderen Seite sind die drei Wicklungen 36a, 36b, 36c miteinander verbunden.

Parallel zu den Schaltern 43 ist jeweils eine Freilaufdiode 44 geschaltet. Sie ist so gepolt, daß sie normalerweise sperrt und, nur wenn der gegenüberliegende Schalter geöffnet wird, einen aufgrund von Selbstinduktion erzeugten, kurzzeitigen Stromfluß in Gegenrichtung durchläßt.

Jeder Schalter 43 symbolisiert eine Parallelschaltung von mehreren (z.B. fünf) MOS-Feldeffektransistoren, welche von der Steuereinrichtung 31 zur Bildung eines Drei-Phasen-Stroms gewünschter Amplitude, Frequenz und Phase direkt angesteuert werden.

Der Gleichspannungsumsetzer 18 umfaßt zwei Unter-Baugruppen, nämlich eine, welche elektrische Energie von dem niedrigen Spannungsniveau (12 V) auf das hohe Zwischenkreis-Spannungsniveau (60V bzw. 350 V) bringen kann, und eine andere, welche - umgekehrt - elektrische Energie von dem hohen Spannungsniveau (60V bzw. 350 V) auf das niedrige Spannungsniveau (12 V) bringen kann. Bei Ausführungsformen mit im Zwischenkreis angeordneter Fahrzeugbatterie kann die erstgenannte Unter-Baugruppe entfallen.

Bei der ersten Unter-Baugruppe handelt es z.B. sich um einen Hochsetzsteller 45. Dieser wird durch eine Serienschaltung einer mit dem Pluspol der Fahrzeugbatterie 11 verbundenen Induktivität 46 und einen mit deren Minuspol und dem Minuspol des Zwischenkreises verbundenen Schalter 47 gebildet, wobei diese Serienschaltung mittig über eine (in Durchlaßrichtung gepolte) Hochsetzdiode 48 mit dem Pluspol des Zwischenkreises verbunden ist. Bei geschlossenem Schalter 47 fließt ein Kreisstrom vom Plus- zum Minuspol der Fahrzeugbatterie 11. Nach Öffnen des Schalters 47 sucht eine Selbstinduktionsspannung ein Zusammenbrechen dieses Stromes zu verhindern, mit der Folge, daß kurzzeitig das hohe Zwischenkreis-Spannungsniveau (350 V) überschritten wird und Strom durch die (ansonsten sperrende) Hochsetzdiode 48 fließt und den Zwischenkreisspeicher 19 auflädt. Durch periodisches Öffnen und Schließen des Schalters 47 erzielt man einen quasi-stationären Ladestrom, z.B. als Vorbereitung des Startvorgangs. Bei dem Schalter 47 handelt es sich um einen Halbleiterschalter, welcher direkt von der Steuereinrichtung 31 angesteuert wird.

Die zweite Unter-Baugruppe ist z.B. ein Spannungsuntersetzer 49, der ähnlich einem Schaltnetzteil funktioniert. Er umfaßt zwei Serienschaltungen von Schaltern 50 zwischen dem Plus- und Minuspol des Zwischenkreises, mit jeweils parallelgeschalteten Freilaufdioden 51. Die Enden einer Primärwicklung eines Hochfrequenz(HF)-Transformators 52 sind jeweils mit den Mitten dieser Serienschaltungen verbunden. Die Sekundärwicklung des HF-Transformators 52 speist eine Gleichrichtungs- und Glättungseinheit 53, welche wiederum die Fahrzeugbatterie 11 und ggf. Niederspannungsverbraucher 23 speist. Die Schalter 50 symbolisieren Halbleiterschalter, welche direkt von der Steuereinrichtung 31 angesteuert werden. Durch periodisches Öffnen und Schließen der Schalter läßt sich ein hochfrequenter Wechselstrom erzeugen, welcher in der Sekundärwicklung des HF-Transformators 52 eine entsprechende Wechselspannung auf niedrigerem Spannungsniveau induziert, welche durch die Einheit 53 gleichgerichtet und geglättet wird. Der genaue Wert der resultierenden Gleichspannung läßt sich mit Hilfe der Schalter 50 durch Variation der Schaltfrequenz genau einstellen.

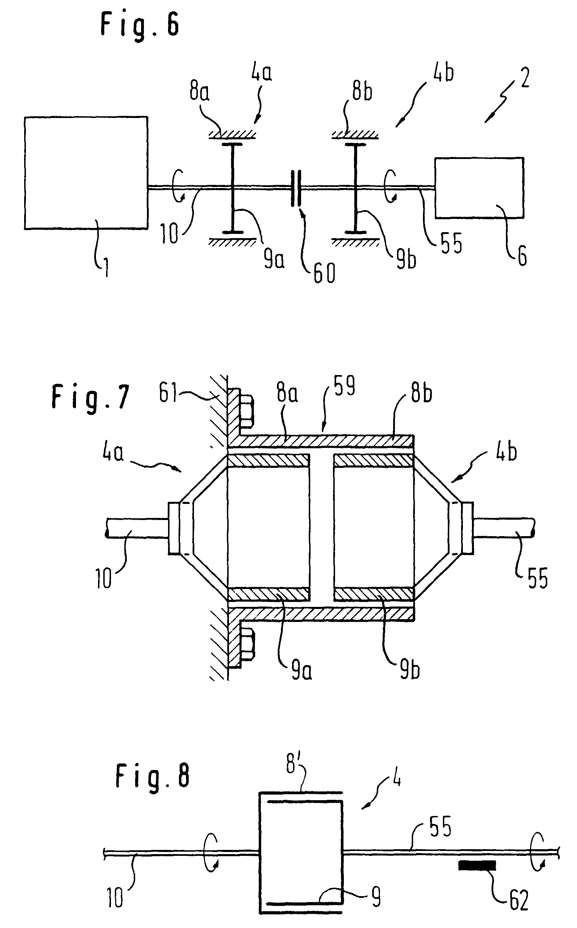

Eine elektrische Doppelmaschine 4 gemäß Fig. 6, welche zusätzlich die Funktion einer elektromagnetischen Kupplung und/oder Synchronisiereinrichtung für ein nachgeschaltetes Getriebe ausführen kann, sitzt im Antriebsstrang 2 zwischen der Antriebswelle, z.B. der Triebwelle 10 des Verbrennungsmotors 1, und der Abtriebswelle, z.B. der mit einem Getriebe 6 gekoppelten Getriebewelle 55. Sie umfaßt zwei elektrische Maschinen 4a, 4b mit jeweils einem drehfesten Ständer 8a, 8b und jeweils einem mit der An- bzw. Abtriebswelle drehenden Läufer 9a, 9b. Die Läufer 9a, 9b - und damit die An- und Abtriebswelle - sind mit Hilfe einer mechanischen Überbrückungs-Kupplung 60 - hier einer form- oder reibschlüssigen Kupplung - fest mechanisch miteinander verbindbar. Diese ist vorzugsweise in gesteuerter Weise betätigbar, z.B. mechanisch, elektrisch, magnetisch, elektromagnetisch, hydraulisch oder pneumatisch. Bei anderen Ausführungsformen ist die Überbrückungs-Kupplung 60 nicht vorhanden.

Fig. 7 zeigt eine Fig. 6 entsprechende Doppelmaschine 4, bei der die Läufer 9a, 9b in koaxialer Anordnung in einem gemeinsamen Ständerkörper 59 angeordnet sind, der die beiden (elektrisch getrennten oder trennbaren) Ständer 8a, 8b aufnimmt und drehfest z.B. an einem Kurbelgehäuse 61 des Verbrennungsmotors 1 befestigt ist. Die (hier nicht dargestellte) Überbrückungskupplung kann z.B. dadurch realisiert sein, daß die Läufer 9a, 9b durch Axialverschiebung miteinander in Form- oder Reibschluß gebracht werden können. Alternativ kann sie durch z.B. durch eine in die Läufer 9a, 9b integrierte Reib- oder Klauenkupplung gebildet sein.

Bei der Doppelmaschine 4 der Fig. 6 und 7 erfolgt das Direktstarten des Verbrennungsmotors 1, indem die antriebsaggregatseitige Machine 4a als Motor betrieben wird.

Eine elektrische Einzelmaschine 4 gemäß Fig. 8, welche die Funktion einer elektromagnetischen Kupplung und/oder Synchronisiereinrichtung hat, weist ein inneres und ein äußeres elektromagnetisches Wirkelement auf, die in Anlehnung an bei elektrischen Maschinen üblichen Bezeichnungsweisen hier Läufer 9 und Ständer 8' genannt werden. Der Läufer 9 ist drehfest mit der Abtriebswelle 55 und der Ständer 8' ist drehfest mit der Triebwelle 10 verbunden (bei anderen - nicht gezeigten - Ausführungsformen ist diese Zuordnung umgekehrt). Die elektrische Maschine 4 ist also zusätzlich zur Läuferdrehung als Ganzes drehbar; der Begriff "Ständer" ist also angesichts dessen Drehbarkeit nur in einem übertragenen Sinn zu verstehen. Während es bei einer feststehenden elektrischen Maschine - z.B. einer Drehfeld-Maschine - möglich ist, die Stromzufuhr auf das feststehende Wirkelement (d.h. den Ständer) zu beschränken und im drehbaren Wirkelement (d.h. im Läufer) Ströme ohne Stromzufuhr nur durch Induktion hervorzurufen, wird hier - wo beide Wirkelemente drehbar sind - wenigstens einem von ihnen (hier dem Ständer 8') Strom über drehbewegliche elektrische Verbindungen (z.B. über hier nicht gezeigte Schleifer/Schleifring-Kontakte) zugeführt. Die Abtriebswelle 55 ist mit einer mechanischen Kupplung, hier einer gegen das Fahrzeugchassis oder das Getriebegehäuse abgestützten Bremse 62 gegen Drehung festlegbar. Die gezeigte Ausführungsform hat keine Überbrückungskupplung, andere (nicht gezeigte) Ausführungsformen sind jedoch mit einer reib- oder kraftschlüssigen Überbrückungskupplung zur mechanischen Verbindung der Wellen 10, 55 ausgerüstet. Die Maschine 4 kann im oder am Motorgehäuse, Getriebegehäuse oder an beliebiger anderer Stelle im Antriebsstrang 2 plaziert sein.

Die elektrische Maschine 4 kann den Verbrennungsmotors 1 in Abstützung gegen die durch die Bremse 62 festgelegte Abtriebswelle 55 direktstarten.

Die elektrische Einzelmaschine 4 kann - wie selbstverständlich die Doppelmaschine der Fig. 6 und 7 - verschiedene Zusatzfunktionen ausführen.

In der Funktion als Schaltkupplung und ggf. als Anfahrkupplung wird ein Gleichlauf der Wellen 10, 55 durch eine solche Einstellung der drehmomenterzeugenden magnetischen Felder der Maschine 4 erzielt, daß Drehzahlgleichheit zwischen den Wellen 10 und 55 herrscht, also der Kupplungsschlupf zwischen Ständer 8' und Läufer 9 genau verschwindet. Bei einer Asynchronmaschine wird dies beispielsweise durch die Regelung bzw. Steuerung des magnetischen Schlupfes eines entgegen der Antriebsdrehmoment-Richtung umlaufenden Drehfelds geeigneter Frequenz und Amplitude erzielt. Eine (hier nicht dargestellte) formschlüssige Überbrückungskupplung eliminiert bei verschwindendem Kupplungsschlupf die elektromagnetischen Verluste.

Die aktive Getriebesynchronisierung dient dazu, die Antriebswelle 55 während eines Gangwechsels so zu beschleunigen oder abzubremsen, daß die in Kämmung zu bringenden Getriebezahnräder gleiche Umfangsgeschwindigkeiten haben. Diese Funktion kann bei Ausführungsformen der Einzelmaschine 4 auch ohne Kupplungsfunktion realisiert sein. Die Wellenbeschleunigung oder -abbremsung erfolgt in Abstützung gegen die mit der variablen Drehzahl des Verbrennungsmotors 1 drehende Triebwelle 10. Der Beitrag dieser Drehung wird bei der Bestimmung und Steuerung der für die jeweilige Synchronisation nötigen Relativdrehzahl der Maschine 4 berücksichtigt.

Eine Verringerung von Drehungleichförmigkeiten der Triebwelle 10 kann im Stand des Fahrzeugs in Abstützung gegen den dann mit Hilfe der Bremse 62 gegen Drehung festgelegten Läufer 9 erfolgen. Bei angetriebener Fahrt können bei nicht eingekuppelter (oder nicht vorhandener) Überbrückungskupplung Drehungleichförmigkeiten der Abtriebswelle 55 durch schnelles Variieren des übertragenen Drehmoments verringert werden, und zwar durch dessen Verkleinerung (d.h. einer Vergrößerung des Kupplungsschlupfes) bei positiver Drehungleichförmigkeit und dessen Vergrößerung (d.h. einer Verkleinerung des Kupplungsschlupfes) bei negativer.

Zusatzbeschleunigung oder -bremsung ist bei nicht eingekuppelter Überbrückungskupplung durch Erzeugung entsprechenden Drehmomente - oder anders ausgedrückt - kleineren oder größeren Kupplungsschlupfes möglich. Die elektrische Maschine 4 kann in eine ASR-Regelung derart einbezogen sein, daß bei zu großem Antriebsrad-Schlupf der Kupplungsschlupf augenblicklich vergrößert und damit das an den Antriebsrädern anliegende Moment verkleinert wird. Eine Generatorfunktion zur Stromerzeugung wird durch dauernd aufrechterhaltenen Kupplungsschlupf erzielt.

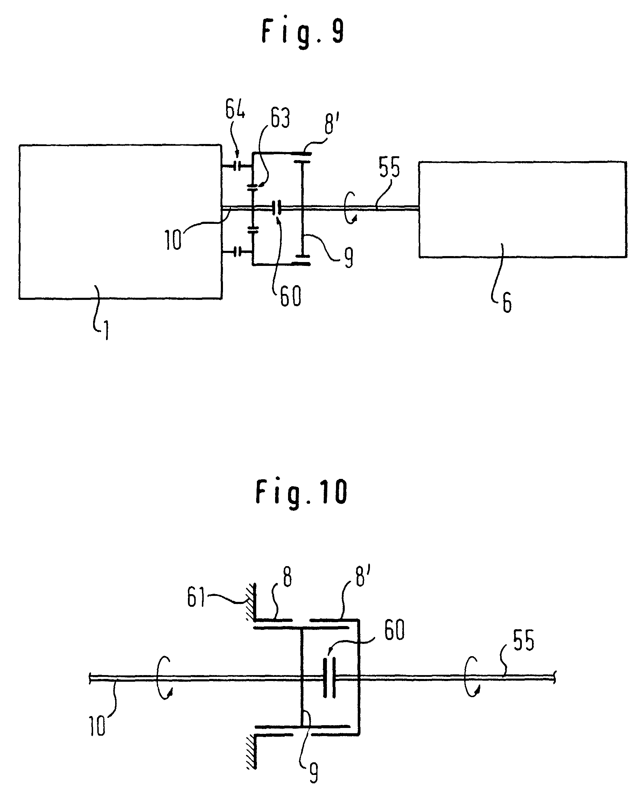

Fig. 9 zeigt eine Weiterbildung der elektrischen Maschine mit drehbaren Wirkeinheiten gemäß Fig. 8. Bei ihr ist der Ständer 8' nicht dauernd mit der Triebwelle 10 gekoppelt ist, sondern kann in steuerbarer Weise drei verschiedene Kopplungszustände einnehmen kann:
1. mit der Triebwelle 10 gekoppelt (wie in Fig. 11);
2. ohne Kopplung mit der Triebwelle 10 frei drehbar;
3. gegen Drehung festgelegt.

Zwei zusätzliche mechanische Kupplungen, bei denen es sich um reibschlüssige, vorzugsweise aber um formschlüssige Kupplungen handeln kann, dienen hierzu: Eine Motorkupplung 63, die im geschlossenen Zustand den Ständer 8' mit der Triebwelle 10 koppelt (Kopplungszustand 1), und eine Festleg-Kupplung 64, die ihn im geschlossenen Zustand gegen Drehung festlegt, z.B. durch Kopplung mit dem Kurbelgehäuse 61 (Kopplungszustand 3). Für den Kopplungszustand 2 sind beide geöffnet; ein gleichzeitiges Schließen ist ein verbotener Zustand. Die Kupplungen 63, 64 (die in Fig. 12 nur aus Gründen der Rotationsymmetrie doppelt gezeichnet sind), sowie die Überbrückungskupplung 60 sind in gesteuerter Weise betätigbar, z.B. mechanisch, elektrisch, hydraulisch oder pneumatisch.

Das Direktstarten erfolgt im Kopplungszustand 3. Im einzelnen erfolgt die Steuerung der elektrischen Maschine 4 und der Kupplungen 60, 62, 63 durch die verschiedenen Betriebszustände und Funktionen des Antriebssystems gemäß folgenden Verfahrensabläufen:
I. Direktstarten des Verbrennungsmotors 1:
   1. Gang freischalten (z.B. durch Bedienungsperson);
   2. Festleg-Kupplung 64 und Überbrückungskupplung 60 werden geschlossen;
   3. Läufer 9 wird durch elektrische Maschine 4 im Zusammenlauf mit dem Verbrennungsmotor 1 aus dem Stand auf Leerlauf-Drehzahl beschleunigt;
II. Anfahren des Fahrzeugs:
   1. Überbrückungskupplung 60 wird geöffnet;
   2. Läufer 9 wird durch elektrische Maschine 4 zum Stillstand gebracht;
   3. 1. Gang wird eingelegt (z.B. durch Bedienungsperson);
   4. Festleg-Kupplung 64 wird geöffnet, so daß der Ständer 8' frei dreht;
   5. Ständer 8' wird durch elektrische Maschine 4 auf Verbrennungsmotor-Drehzahl gebracht;
   6. Motorkupplung 63 wird geschlossen;
   8. Läufer 9 wird elektromagnetisch mit Anfahr-Nennmoment beschleunigt, d.h. durch Ständer 8' mitgenommen;
   9. bei Gleichlauf wird Überbrückungskupplung 60 geschlossen;
III. Stationärer Fahrbetrieb mit Drehungleichförmigkeits-Verringerung:
   1. Motorkupplung 63 wird geöffnet, so daß der Ständer 8' frei dreht;
   2. Ständer 8' wird durch elektrische Maschine 4 zum Stillstand gebracht;
   3. Festleg-Kupplung 64 wird geschlossen, so daß eine starre Verbindung zwischen Ständer 8' und dem Kurbelgehäuse des Verbrennungsmotors 1 herrscht;
   4. Wechselmoment zur Verringerung von Drehungleichförmigkeiten der Triebwelle 10 wird von der elektrischen Maschine 4 erzeugt;
IV. Schalten:
   1. Verbrennungsmotor-Antriebsmoment wird weggenommen (ggf. mit Unterstützung der elektrischen Maschine) (z.B. durch Bedienungsperson);
   2. Überbrückungskupplung 60 wird geöffnet;
   3. Gang wird herausgenommen (z.B. durch Bedienungsperson) ;
   4. Läufer 9 wird auf diejenige neue Drehzahl beschleunigt oder abgebremst, welche die Synchronisierbedingung für den neu einzulegenden Gang erfüllt;
   5. dieser Gang wird eingelegt (z.B. durch Bedienungsperson);
   6. Überbrückungskupplung 60 wird geschlossen;
   7. Verbrennungsmotor-Antriebsmoment wird wieder freigegeben (z.B. durch Bedienungsperson).

Nach dem Starten in Schritt I ist auch eine Drehungleichförmigkeits-Verringerung im Leerlauf möglich.

Das Schließen der Kupplungen 60, 63, 64 erfolgt nur bei jeweils verschwindender Relativdrehzahl. Die Generatorfunktion und bremsende oder antreibende Gleich-Drehmomente werden - wie die Synchronisierungsfunktion und die Drehungleichförmigkeits-Verringerung - bei geschlossener Überbrückungskupplung 60 und geschlossener Festleg-Kupplung 64 durch entsprechende bremsende bzw. antreibende Momente der elektrischen Maschine 4 verwirklicht.

Die elektrische Maschine 4 gemäß Fig. 10 entspricht funktionell weitgehend der in Fig. 9 gezeigten, so daß die Ausführungen zu Fig. 9 auch hier - soweit sie nicht im folgenden genannte Abweichungen betreffen - Geltung haben. Ein wesentlicher Unterschied zur Maschine gemäß Fig. 9 besteht darin, daß die Umschaltung von "drehbarem Läufer" auf "feststehenden Läufer" nicht mechanisch durch Öffnen und Schließen von Kupplungen, sondern auf elektrischem Wege erfolgt. Ein weiterer Unterschied besteht darin, daß bei der gezeigten Maschine 4 die Rollen der Triebwelle 10 und der Abtriebswelle 55 gegenüber Fig. 12 vertauscht sind, was zu geringfügigen - unten näher erläuterten - Abweichungen in der Funktionsweise führt. Bei (nicht gezeigten) Ausführungsformen entsprechen die Rollen der Triebwelle 10 und der Abtriebswelle 55 jedoch denen von Fig. 12; diese Ausführungsformen zeigen nicht diese Abweichungen.

Bei der gezeigten elektrischen Maschine 4 sind - wie gesagt - der (außenliegende) Ständer 8' und der (innenliegende) Läufer 9 drehfest und nicht entkoppelbar mit der Abtriebswelle 55 bzw. der Triebwelle 10 verbunden. Zusätzlich zum drehbaren Ständer 8' ist die Maschine 4 mit einem gegen Drehung festliegenden Ständer 8 ausgerüstet, der sich (z.B.) gegen das Kurbelgehäuse 61 abstützt. Dieser ist dem drehbaren Ständer 8' unmittelbar benachbart, und zwar in Axialrichtung (z.B.) zum Verbrennungsmotor 1 hin versetzt. Er ist koaxial zum drehbaren Ständer 8' angeordnet und weist einen Innendurchmesser wie jener auf. Die Wicklungen 36 der beiden Ständer 8', 8 sind eigenständig, so daß sie in ihrer Magnetfelderzeugung entkoppelt oder entkoppelbar sind. Der Läufer 9 ist so breit ausgebildet, daß er sich in Axialrichtung im wesentlichen über die Wirkflächen der beiden Ständer 8', 8 erstreckt. Eine Überbrückungskupplung 60 koppelt - wie in Fig. 12 - die Triebwelle 10 mit der Abtriebswelle 50. Bei anderen (nicht gezeigten) Ausführungsformen sind der Läufer 9 außen- und die Ständer 8', 8 innenliegend.

Das Umschalten zwischen dem festliegenden Ständer 8 und dem drehbaren Ständer 8' erfolgt mit Hilfe einer umschaltbaren Versorgungseinheit, hier des geeignet umschaltbaren Wechselrichters 17. Dieser versorgt entweder für die Funktionen Direktstart, Drehungleichförmigkeits-Verringerung, Fahrzeugbremsung und -beschleunigung sowie die Generatorfunktion den festgelegten Ständer 8 oder für die Funktionen elektomagnetische Kupplung oder Synchronisierung den drehbaren Ständer 8' mit den hierfür jeweils erforderlichen Strömen und Spannungen, wobei er zwischen diesen trägheitslos und ohne merkliche Zeitverzögerung umschalten kann.

Anders als in Fig. 9 wird die Funktion "Synchronisierung" durch Momenterzeugung zwischen dem drehbaren Ständer 8' und dem Läufer 9 gesteuert, was steuerungstechnisch wegen der Abstützung gegen die drehzahlvariable Triebwelle 10 aufwendiger ist. Dies liegt daran, daß bei der Maschine 4 gemäß Fig. 10 die Überbrückungskupplung 60 in Abtriebsrichtung gesehen hinter der durch den festliegenden Ständer 8 und den Läufer 9 gebildeten elektrischen Maschine liegt, während sie bei der Maschine 4 gemäß Fig. 9 bei festliegendem Ständer vor der elektrischen Maschine 4 liegt. Bei der (nicht gezeigten) Ausführungsform, bei der die Rollen der Triebwelle 10 und der Abtriebswelle 55 gegenüber Fig. 10 vertauscht sind, ist dieser funktionelle Unterschied zu Fig. 9 nicht vorhanden.

Bei anderen Ausführungsformen werden die beiden Ständer 8, 8' simultan und unabhängig mit Hilfe zweier unabhängiger Versorgungseinrichtungen, hier Wechselrichter 17 gespeist. Dies ermöglicht eine Ausführung von dem festliegenden Ständer 8 zugeordneten Funktionen, z.B. der Generatorfunktion und der Drehungleichförmigkeits-Verringerung auch während der Ausführung von dem drehbaren Ständer 8' zugeordneten Funktionen, z.B. der elektromagnetischen Kupplungsfunktion.

## Patentansprüche

1. Antriebssystem für ein Kraftfahrzeug, mit:
- einem Verbrennungsmotor (1) als Antriebsaggregat;
- einer direkt mit der Triebwelle (10) des Antriebsaggregats gekoppelten oder koppelbaren elektrischen Drehfeldmaschine (4), welche mit der gleichen Drehzahl wie die Triebwelle (10) dreht und so ausgebildet ist, daß sie das Antriebsaggregat im Zusammenlauf aus dem Stand starten kann;
- wenigstens einem Wechselrichter (17), der die für die magnetischen Felder der elektrischen Maschine (4) benötigten Spannungen und/oder Ströme variabler Frequenz, Amplitude und/oder Phase erzeugt;
- wobei der Wechselrichter (17) einen Zwischenkreis mit einem gegenüber einem Bordnetz des Kraftfahrzeugs erhöhten Spannungsniveau aufweist, wobei in diesem Bordnetz ein Energiespeicher (11) zum Speichern elektrischer Energie liegt;
- und wobei ein weiterer Energiespeicher (24) vorgesehen ist, dem zum Starten Energie entnommen wird, und bei dem es sich um einen auf dem erhöhten Spannungsniveau des Zwischenkreises liegenden elektrischen Energiespeicher (25) und/oder um einen durch Parallelschaltung zu einem auf dem erhöhten Spannungsniveau liegenden Zwischenkreiskondensator (19) elektrisch mit dem Zwischenkreis verbundenen, elektrisch betriebenen Schwungradspeicher (26) handelt; und mit
- einer automatischen Start-Stop-Steuerung, in deren Rahmen das Antriebsaggregat durch die elektrische Maschine (4) gestartet wird.

2. Antriebssystem nach Anspruch 1, bei welchem der Läufer (9) der elektrischen Maschine (4) auf der Triebwelle (10) oder einer Verlängerung hiervon sitzt.

3. Antriebssystem nach Anspruch 1 oder 2, bei welchem die Start-Stop-Steuerung bei Vorliegen einer Stopbedingung ein automatisches Stoppen des Antriebsaggregats veranlaßt, wobei in die Stopbedingung insbesondere eine oder mehrere der folgenden Einzelbedingungen eingehen: Nullast, Schiebebetrieb, Leerlauf des Antriebsaggregats, Stillstand des Kraftfahrzeugs, Antriebsaggregats ist ausgekuppelt, kein Gang ist eingelegt, Betriebs- oder Feststellbremse ist betätigt, Betätigung eines Stopschalters.

4. Antriebssystem nach einem der vorhergehenden Ansprüche, bei welchem die Start-Stop-Steuerung bei Vorliegen einer Startbedingung ein automatisches Starten des Antriebsaggregats mit Hilfe der elektrischen Maschine (4) veranlaßt, wobei in die Startbedingung insbesondere eine oder mehrere der folgenden Einzelbedingungen eingehen: Betätigung eines Fahrpedals, Lösen der Betriebs- bzw. Feststellbremse, Betätigen der Kupplung, Berühren oder Bewegen eines Gangschalthebels, Einlegen eines Ganges, Betätigen eines Startschalters.

5. Antriebssystem nach einem der vorhergehenden Ansprüche, bei welchem die elektrische Maschine (4) wenigstens im wesentlichen bis zum Erreichen der Leerlauf-drehzahl des Antriebsaggregats antreibend wirkt.

6. Antriebssystem nach einem der vorhergehenden Ansprüche, bei welchem die elektrische Maschine im Fall eines Antriebsaggregat-Stops bei Schubbetrieb als elektrische Bremse wirkt.

7. Antriebssystem nach einem der vorhergehenden Ansprüche, bei welchem die elektrische Maschine (4) außerdem die Funktion einer aktiven Verringerung von Drehungleichförmigkeiten hat.

8. Antriebssystem nach Anspruch 7, bei welchem die elektrische Maschine (4) so gesteuert wird, daß sie ein schnell alternierendes, und zwar bei einer positiven Drehungleichförmigkeit ein bremsendes und bei einer negativen Drehungleichförmigkeit ein antreibendes Drehmoment erzeugt und/oder zur Erzielung einer antreibenden Wirkung oder einer bremsenden oder generatorischen Wirkung ein positives bzw. negatives Gleich-Drehmoment erzeugt.

9. Antriebssystem nach Anspruch 7 oder 8, bei welchem beim Verringern einer positiven Drehungleichförmigkeit gewonnene Energie, das heißt Drehungleichförmigkeits-Bremsenergie, und/oder die bei bremsendem Gleich-Drehmoment gewonnene Energie, das heißt Gleichdrehmoment-Bremsenergie, wenigstens teilweise gespeichert wird und wenigstens teilweise wiederverwendet wird, ggf. zum Verringern einer negativen Drehungleichförmigkeit wiederverwendet wird.

10. Antriebssystem nach einem der vorhergehenden Ansprüche, bei welchem die elektrische Maschine (4) außerdem die Funktion eines Generators zur Stromversorgung hat.

11. Antriebssystem nach einem der vorhergehenden Ansprüche, bei welchem die elektrische Maschine (4) ein Beschleunigen und/oder Abbremsen der Triebwelle (10) herbeiführen oder unterstützen kann, insbesondere um ein Fahrzeug zu beschleunigen bzw. abzubremsen und/oder um im Rahmen einer Antriebs-Schlupf-Regelung durch Bremsen den Schlupf eines Antriebsrades zu verringern.

12. Antriebssystem nach einem der vorhergehenden Ansprüche, bei welchem die elektrische Maschine (4) eine Drehmomentdichte - bezogen auf das maximale Drehmoment - größer als 0,01 Nm/cm³ aufweist.

13. Antriebsystem nach einem der vorhergehenden Ansprüche, bei welchem der Wechselrichter (17) elektronische Schalter (43, 47, 50) aufweist, die fluidgekühlt, insbesondere siedebadgekühlt, sind.

14. Antriebssystem nach einem der vorhergehenden Ansprüche, bei welchem die elektrische Maschine (4) als elektromagnetische Kupplung im Antriebsstrang (2) und/oder als aktive Getriebe-Synchronisiereinrichtung oder als ein Teil hiervon wirkt.

## Claims

1. A drive system, especially for a motor vehicle, with
- an internal combustion engine (1) as a drive assembly;
- an electric rotary-field machine (4) that is coupled or can be coupled directly with the drive shaft (10) of the drive assembly, and which rotates at the same speed as the drive shaft (10) and is designed so that it can start the drive assembly by merging in from standstill;
- at least one inverter (17), which generates the voltages and/or currents of variable frequency, amplitude and/or phase that are required for the magnetic fields of the electric machine (4);
- wherein the inverter (17) comprises an intermediate circuit with a voltage level that is higher than an on-board network of the motor vehicle, an energy accumulator (11) lying in this on-board network for the accumulation of electrical energy;
- and wherein another energy accumulator (24) is provided, from which energy is taken for starting, and which involves an electrical energy accumulator (25) lying at the elevated voltage level of the intermediate circuit and/or an electrically operated flywheel accumulator (26) that is electrically connected by parallel switching to an intermediate circuit capacitor (19) lying at the elevated voltage level to the intermediate circuit; and having
- an automatic start-stop control, in the context of which the drive assembly is started by the electric machine (4).

2. A drive system according to Claim 1, in which the rotor (9) of the electric machine (4) sits on the drive shaft (10) or an extension thereof.

3. A drive system according to Claim 1 or 2, in which the start-stop control initiates an automatic stopping of the drive assembly when a stop condition is present, and in particular one or more of the following individual conditions make up the stop condition: no load, shift operation, idling of the drive assembly, standstill of the vehicle, drive assembly disengaged, no gear is engaged, main brake or parking brake is activated, activation of a stop switch.

4. A drive system according to one of the preceding Claims, in which the start-stop control initiates an automatic starting of the drive assembly by means of the electric machine (4) when a start condition is present, and in particular one or more of the following individual conditions make up the start condition: activation of a gas pedal, release of the main brake or parking brake, activation of the clutch, touching or moving a gear shift lever, engagement of a gear, activation of a start switch.

5. A drive system according to one of the preceding Claims, in which the electric machine (4) acts as a drive at least essentially until the idling speed of the drive assembly is reached.

6. A drive system according to one of the preceding Claims, in which the electric machine (4) acts as an electric brake in event of the drive assembly stopping during thrust operation.

7. A drive system according to one of the preceding Claims, in which the electric machine (4) also has the function of an active reduction of rotational non-uniformities.

8. A drive system according to Claim 7, in which the electric machine (4) is controlled so that it generates a rapidly alternating torque, namely, a braking torque for a positive rotational non-uniformity and a driving torque for a negative rotational non-uniformity and/or generates a positive or negative constant torque to achieve a driving action or a braking or generator type action, respectively.

9. A drive system according to Claim 7 or 8, in which energy obtained in reducing a positive rotational non-uniformity, i.e. rotational non-uniformity braking energy, and/or energy obtained from the braking constant torque, i.e. constant torque braking energy, is at least partially stored up and at least partially reused, perhaps to reduce a negative rotational non-uniformity.

10. A drive system according to one of the preceding Claims, in which the electric machine (4) also has the function of a generator for current supply.

11. A drive system according to one of the preceding Claims, in which the electric machine (4) can produce or sustain an acceleration and/or braking of the drive shaft (10), in particular in order to accelerate or brake a vehicle and/or to lessen the slip of a drive wheel by braking in the context of a drive slip control.

12. A drive system according to one of the preceding Claims, in which the electric machine (4) has a torque density - in relation to the maximum torque - greater than 0.01 Nm/cm³.

13. A drive system according to one of the preceding Claims, in which the inverter (17) has electronic switches (43, 47, 50) which are fluid cooled, in particular, boiling bath cooled.

14. A drive system according to one of the preceding Claims, in which the electric machine (4) acts as an electromagnetic coupling in the drive train (2) and/or as an active transmission synchronization device or as a part thereof.

## Revendications

1. Système d'entraînement pour un véhicule automobile, comprenant :
- un moteur à combustion (1) en tant qu'unité d'entraînement,
- une machine électrique à champ tournant (4) couplée ou pouvant être couplée directement à l'arbre d'entraînement (6) de l'unité d'entraînement et qui tourne à la même vitesse de rotation que l'arbre d'entraînement (10) et est agencée de telle sorte qu'elle puisse faire démarrer l'unité d'entraînement d'une manière synchrone à partir de l'état arrêté;
- au moins un onduleur (17), qui produit les tensions et/ ou courants qui sont nécessaires pour les champs magnétiques de la machine électrique (4) et possèdent une fréquence, une amplitude et/ou une phase variables;
- dans lequel l'onduleur (17) comporte un circuit intermédiaire possédant un niveau de tension accru par rapport à un réseau de bord du véhicule automobile, et dans lequel un accumulateur d'énergie (11) servant à accumuler une énergie électrique est disposé dans ce réseau de bord;
- et dans lequel il est prévu un autre accumulateur d'énergie (24), dans lequel de l'énergie est prélevée pour le démarrage et pour lequel il s'agit d'un accumulateur d'énergie électrique (25), qui est situé au niveau de tension accru du circuit intermédiaire, et/ou d'un accumulateur à volant (26) qui fonctionne électriquement et est relié électriquement au circuit intermédiaire au moyen d'un circuit parallèle à un condensateur (19) du circuit intermédiaire, qui est situé au niveau de tension accru ; et
- comportant une unité de commande de démarrage/d'arrêt automatique, dans le cadre de laquelle la machine électrique (4) fait démarrer l'unité d'entraînement.

2. Système d'entraînement selon la revendication 1, dans lequel le rotor (9) de la machine électrique (4) est monté sur l'arbre d'entraînement (10) ou sur un prolongement de cet arbre.

3. Système d'entraînement selon la revendication 1 ou 2, dans lequel dans le cas de la présence d'une condition d'arrêt, l'unité de commande de démarrage-d'arrêt déclenche un arrêt automatique de l'unité d'entraînement, auquel cas, dans la condition d'arrêt, en particulier une ou plusieurs des conditions individuelles suivantes apparaissent : charge nulle, fonctionnement en poussée, fonctionnement à vide, fonctionnement de ralenti de l'unité d'entraînement, état d'arrêt du véhicule automobile, l'unité d'entraînement est désaccouplée, aucune vitesse n'est engagée, le frein de fonctionnement ou le frein de parcage est actionné, actionnement d'un interrupteur d'arrêt.

4. Système d'entraînement selon l'une des revendications précédentes, dans lequel dans le cas de la présence d'une condition de démarrage, l'unité de commande de démarrage-arrêt déclenche un démarrage automatique de l'unité d'entraînement à l'aide de la machine électrique (4), auquel cas, dans la condition de démarrage, en particulier une ou plusieurs des conditions individuelles suivantes apparaissent : actionnement d'une pédale de conduite, desserrage du frein de fonctionnement ou du frein de parcage, actionnement de l'embrayage, contact avec ou déplacement d'un levier de changement de vitesses, engagement d'une vitesse, actionnement d'un commutateur de démarrage.

5. Système d'entraînement selon l'une des revendications précédentes, dans lequel la machine électrique (4) agit avec une action d'entraînement au moins essentiellement jusqu'à ce que soit atteinte la vitesse de rotation de ralenti de l'unité d'entraînement.

6. Système d'entraînement selon l'une des revendications précédentes, dans lequel la machine électrique agit en tant que frein électrique dans le cas d'un arrêt de l'unité d'entraînement lors du fonctionnement en poussée.

7. Système d'entraînement selon l'une des revendications précédentes, selon lequel la machine électrique (4) possède en outre la fonction de réduire de façon active des irrégularités de rotation.

8. Système d'entraînement selon la revendication 7, dans lequel la machine électrique (4) est commandée de telle sorte qu'elle produise un couple à alternances rapides, à savoir un couple de freinage dans le cas d'une uniformité de rotation positive et un couple d'entraînement dans le cas d'une uniformité de rotation négative et/ou produise, pour l'obtention d'une action d'entraînement ou d'une action de freinage ou d'un fonctionnement en générateur, un couple uniforme constant positif ou négatif.

9. Système d'entraînement selon la revendication 7 ou 8, dans lequel l'énergie obtenue dans le cas de la réduction d'une uniformité de rotation positive, c'est-à-dire l'énergie de freinage en cas de non uniformité de rotation, et/ou l'énergie obtenue pour le couple constant de freinage, c'est-à-dire l'énergie de freinage à couple constant, est accumulée au moins partiellement et est réutilisée au moins partiellement, éventuellement pour réduire un défaut d'uniformité de rotation négative.

10. Système d'entraînement selon l'une des revendications précédentes, dans lequel la machine électrique (4) assume en outre la fonction d'une génératrice pour l'alimentation en courant.

11. Système d'entraînement selon l'une des revendications précédentes, dans lequel la machine électrique (4) peut provoquer ou assister une accélération et/ou un freinage de l'arbre d'entraînement (10), notamment pour accélérer ou freiner un véhicule et/ou pour réduire le patinage d'une roue motrice par freinage dans le cadre d'une régulation du patinage d'entraînement.

12. Système d'entraînement selon l'une des revendications précédentes, selon lequel la machine électrique (4) possède une densité de couple - rapportée au couple maximal - supérieure à 0,01 Nm/cm³.

13. Système d'entraînement selon l'une des revendications précédentes, dans lequel l'onduleur (17) comporte des interrupteurs électroniques (43,47,50), qui sont refroidis par un fluide, et notamment sont refroidis par un bain porté à ébullition.

14. Système d'entraînement selon l'une des revendications précédentes, dans lequel la machine électrique (4) agit en tant qu'embrayage électromagnétique dans la chaîne motrice (2) et/ou en tant que dispositif actif de synchronisation de la boîte de vitesses ou en tant que partie d'un tel dispositif.
